# EUROPEAN PATENT APPLICATION

(11) **EP 4 224 351 A1**
(43) Date of publication of application: **09.08.2023**
(21) Application number: 20956267.7
(22) Date of filing: 30.09.2020
(51) Int. Cl.: G06F 21/64

(54) **VERIFICATION METHOD, VERIFICATION PROGRAM, AND INFORMATION PROCESSING DEVICE**

(71) Applicant: FUJITSU LIMITED, Kawasaki-shi, Kanagawa 211-8588 (JP)
(72) Inventor: KATAYAMA, Yoshinori, Kawasaki-shi, Kanagawa 211-8588 (JP); YASAKI, Koichi, Kawasaki-shi, Kanagawa 211-8588 (JP); ITOH, Kouichi, Kawasaki-shi, Kanagawa 211-8588 (JP); YAMAMOTO, Dai, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2020/037248
(87) International publication number: WO 2022/070339

(57) **Abstract**

An information processing device (100) includes a storage unit (110) that stores signature pattern information (111) that represents a feature of one or a plurality of signatures regarding a document acquired in the past in association with a transmission source of the document. The information processing device (100) acquires a transmission source of a target document (101) and first signature pattern information (102) that represents a feature of one or a plurality of signatures regarding the target document (101), from a reception side of the target document (101). The information processing device (100) extracts second signature pattern information (103) associated with the transmission source of the target document (101), from the storage unit (110). The information processing device (100) verifies reliability of the target document (101) based on a result of comparing the acquired first signature pattern information (102) and the extracted second signature pattern information (103).

## Description

### FIELD

The present invention relates to a verification method, a verification program, and an information processing device.

### BACKGROUND

Typically, there is a case where an attacker impersonates another person and transmits a fraudulent document. For example, there is a case where an attacker impersonates another person, transmits a falsified invoice attached to an email, and tries to illegally obtain money. Therefore, it is desired for a reception side of the document to verify reliability of the document.

As related art, for example, there is a technique for generating verification information with a predetermined algorithm using shared information for each of text information and attachment information obtained by dividing a sent mail and adding the verification information to a header of each of the text information and the attachment information.

### SUMMARY

### TECHNICAL PROBLEM

However, with the typical technology, it is difficult to accurately verify reliability of a document. For example, in a case where an attacker impersonates a sender of a document and transmits a fraudulent document, even if a reception side of the document checks an attribute of the sender, a transmission path, or the like, it is not possible to detect that the document is fraudulent.

In one aspect, an object of the present invention is to improve accuracy of verifying reliability of a document.

### SOLUTION TO PROBLEM

According to one embodiment, a verification method, a verification program, and an information processing device are proposed that acquire a transmission source of a transmitted target document and first signature pattern information that represents a feature of one or a plurality of signatures regarding the target document, extract second signature pattern information associated with the acquired transmission source of the target document from a storage unit that stores signature pattern information that represents a feature of one or a plurality of signatures regarding a document acquired in the past in association with the transmission source of the document, and verify reliability of the target document, based on a result of comparing the acquired first signature pattern information and the extracted second signature pattern information.

### ADVANTAGEOUS EFFECTS OF INVENTION

According to one aspect, it is possible to improve accuracy of verifying reliability of a document.

### BRIEF DESCRIPTION OF DRAWINGS

FIG. 1 is an explanatory diagram illustrating an example of a verification method according to an embodiment.
FIG. 2 is an explanatory diagram illustrating an example of a reliability verification system 200.
FIG. 3 is a block diagram illustrating a hardware configuration example of an information processing device 100.
FIG. 4 is an explanatory diagram illustrating an example of storage content of a common DB 400.
FIG. 5 is an explanatory diagram illustrating an example of storage content of a public key pattern DB 500.
FIG. 6 is an explanatory diagram illustrating an example of storage content of a random number management DB 600.
FIG. 7 is an explanatory diagram illustrating an example of storage content of a target event list 700.
FIG. 8 is a block diagram illustrating a hardware configuration example of a transmission-side device 201.
FIG. 9 is a block diagram illustrating a hardware configuration example of a reception-side device 202.
FIG. 10 is a block diagram illustrating a functional configuration example of the reliability verification system 200.
FIG. 11 is an explanatory diagram illustrating a flow of an operation of the reliability verification system 200.
FIG. 12 is an explanatory diagram (part 1) illustrating an example of the operation of the reliability verification system 200.
FIG. 13 is an explanatory diagram (part 2) illustrating an example of the operation of the reliability verification system 200.
FIG. 14 is an explanatory diagram (part 3) illustrating an example of the operation of the reliability verification system 200.
FIG. 15 is an explanatory diagram (part 1) illustrating a specific example of the operation of the reliability verification system 200.
FIG. 16 is an explanatory diagram (part 2) illustrating the specific example of the operation of the reliability verification system 200.
FIG. 17 is an explanatory diagram (part 3) illustrating the specific example of the operation of the reliability verification system 200.
FIG. 18 is a flowchart illustrating an example of a detection processing procedure.
FIG. 19 is a flowchart illustrating an example of a transmission preparation processing procedure.
FIG. 20 is a flowchart illustrating an example of an opening processing procedure.
FIG. 21 is a sequence diagram illustrating an example of a signature generation processing procedure.
FIG. 22 is a sequence diagram (part 1) illustrating another example of the signature generation processing procedure.
FIG. 23 is a sequence diagram (part 2) illustrating the another example of the signature generation processing procedure.
FIG. 24 is a sequence diagram illustrating an example of a verification request processing procedure.
FIG. 25 is a sequence diagram illustrating an example of a transmission source authentication processing procedure.
FIG. 26 is a sequence diagram illustrating another example of the transmission source authentication processing procedure.

### DESCRIPTION OF EMBODIMENTS

Hereinafter, embodiments of a verification method, a verification program, an information processing device according to the present invention will be described in detail with reference to the drawings.

### (Example of Verification Method According to Embodiment)

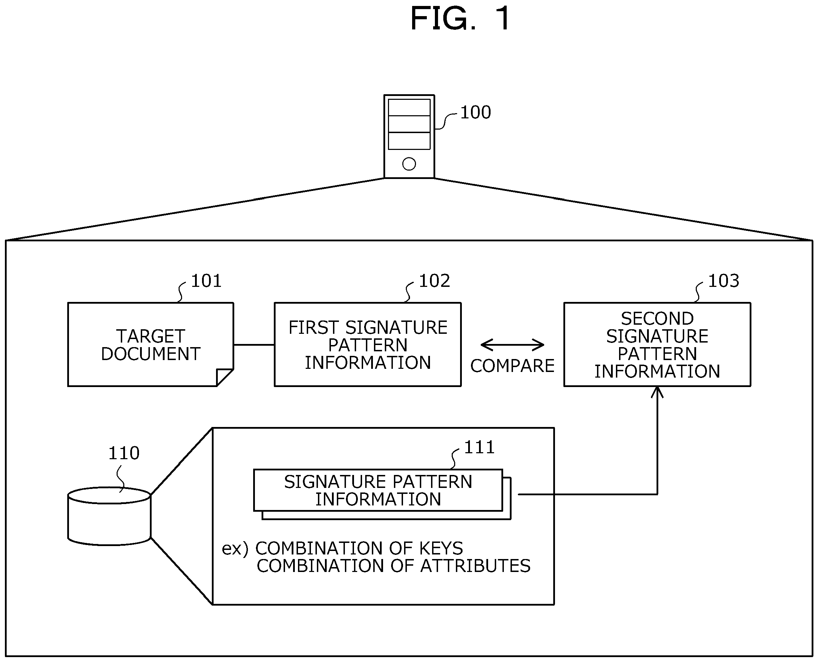

FIG. 1 is an explanatory diagram illustrating an example of a verification method according to an embodiment. An information processing device 100 is a computer that verifies reliability of a document. The document is, for example, information indicating writing. The document is, for example, attached to an email.

Typically, there is a case where attacks for transmitting a fraudulent document is performed by impersonating another person. For example, a business-email fraud is committed in which an attacker pretends to be another person, transmits a falsified invoice attached to an email, and tries to illegally obtain money. For example, the following Reference Document 1 can be referred about the business-email fraud.

Reference Document 1: "Top 10 Information Security Threats 2018", [online], March 30, 2018, IPA, INFORMATION-TECHNOLOGY PROMOTION AGENCY, JAPAN, [retrieved on September 24, 2020], Internet < URL :https://www.ipa.go.jp/security/vuln/10threats2018.html>
Here, if a reception side of a document cannot accurately verify reliability of the document, a receiver of the document or a creator of the document suffers loss. For example, it is considered, due to a business-email fraud, that the receiver of the document mistakenly pays the attacker according to a falsified invoice.

Therefore, it is desired that the reception side of the document can accurately verify the reliability of the document. However, with the related art, it is difficult for the reception side of the document to accurately verify the reliability of the document.

For example, a situation can be considered where the reception side of the document implements a security technology such as spam check or virus check. In this situation, there is a case where it is not possible to accurately verify the reliability of the document. Specifically, the falsified invoice tends to be described in a format same as a formal invoice, and it is difficult to detect the falsified invoice through spam check. Furthermore, specifically, the falsified invoice does not intend virus infection and tends not to include virus, and it is difficult to detect the falsified invoice through virus check.

Furthermore, for example, a situation can be considered where the reception side of the document implements targeted attack mail countermeasure technology for detecting impersonation of an attacker by checking an attribute of a creator of the document, a transmission path of the document, or the like. Even in this situation, there is a case where the reliability of the document cannot be accurately verified. Specifically, if the attacker pretends to be an authorized creator of the invoice, even if the attribute of the creator of the document, the transmission path of the document, or the like is checked, it is difficult to detect the falsified invoice.

Furthermore, for example, a situation can be considered where a transmission side of the document implements a countermeasure technology called S/MIME for encrypting the document and adding an electronic signature to the document. In this situation, key information used for encryption and signature is managed by the transmission side of the document in order to accurately verify the reliability of the document, and a workload on the creator of the document increases. Furthermore, if the key information is leaked, it is difficult to ensure the reliability of the document.

Therefore, in the present embodiment, a verification method will be described that enables a reception side of the document to accurately verify the reliability of the document while the increase in the workload on the creator of the document is suppressed on the transmission side of the document.

In the example in FIG. 1, the information processing device 100 includes a storage unit 110. The storage unit 110 stores signature pattern information 111 that represents a feature of one or a plurality of signatures regarding a document acquired in the past in association with a transmission source of the document. The signature may be an aggregate signature obtained by aggregating a plurality of signatures. The signature pattern information 111 represents, for example, a combination of key information used to create the one or the plurality of signatures as a feature. The signature pattern information 111 represents, for example, a combination of attributes of the creators of the one or the plurality of signatures as a feature. The signature pattern information 111 may represent, for example, a feature of an aggregate signature. The signature pattern information 111 may represent, for example, a feature of a plurality of signatures aggregated in the aggregate signature.

The signature regarding the document is, for example, a signature attached to a document. The document is, for example, information indicating writing. The document is, for example, information attached to an email and to be transmitted. For example, after being transmitted from the transmission source to the reception side, the document is acquired by the information processing device 100. Furthermore, the reception side may be the information processing device 100. In this case, the information processing device 100 acquires the document by receiving the document.

The information processing device 100 acquires a transmission source of a target document 101 and first signature pattern information 102 that represents a feature of one or a plurality of signatures regarding the target document 101. For example, the information processing device 100 acquires the transmission source of the target document 101 and the first signature pattern information 102 that represents the feature of the one or the plurality of signatures regarding the target document 101 from the reception side of the target document 101.

The information processing device 100 may acquire the transmission source of the target document 101 by acquiring the target document 101 and specifying the transmission source of the target document 101 based on the acquired target document 101.
(1-2) The information processing device 100 extracts second signature pattern information 103 associated with the transmission source of the acquired target document 101, from the storage unit 110.
(1-3) The information processing device 100 verifies reliability of the target document 101, based on a result of comparing the acquired first signature pattern information 102 and the extracted second signature pattern information 103. Then, the information processing device 100 transmits the verified result to the target document 101.

For example, in a case where the acquired first signature pattern information 102 matches the extracted second signature pattern information 103, the information processing device 100 determines that the target document 101 has reliability. On the other hand, for example, in a case where the acquired first signature pattern information 102 does not match the extracted second signature pattern information 103, the information processing device 100 determines that the target document 101 does not have reliability. Then, for example, the information processing device 100 transmits a result of determining whether or not the target document 101 has reliability to the reception side of the target document 101.

As a result, the information processing device 100 can accurately verify the reliability of the document on the reception side of the document while suppressing an increase in the workload on the creator of the document on the transmission side of the document. For example, the information processing device 100 can eliminate need to manage the key information used to create the signature on the transmission side of the document and can suppress the increase in the workload on the creator of the document.

Furthermore, for example, the information processing device 100 can verify the reliability of the target document 101, with reference to the second signature pattern information 103 that represents a valid feature of one or a plurality of signatures acquired in the past. Then, for example, the information processing device 100 can transmit the result of verifying the reliability of the target document 101 to the reception side of the document and enables the reception side of the document to accurately verify the reliability of the document. Therefore, the information processing device 100 can prevent a business-email fraud.

Furthermore, in a case where the signature pattern information 111 represents the features of the plurality of signatures, the information processing device 100 can accurately verify the reliability of the target document 101 even if the key information used to create any one of the plurality of signatures is leaked. For example, if all the key information used to create each of the plurality of signatures is not leaked, the information processing device 100 can accurately verify the reliability of the target document 101. Even if an attacker pretends to be a creator who has created any one of the plurality of signatures, the information processing device 100 accurately verify the reliability of the target document 101.

Here, a case has been described where the information processing device 100 determines whether or not the target document 101 has reliability based on whether or not the first signature pattern information 102 matches the second signature pattern information 103. However, the present invention is not limited to this. For example, there may be a case where the information processing device 100 determines the reliability of the target document 101 in a stepwise manner, based on a similarity between the first signature pattern information 102 and the second signature pattern information 103.

### (Example of Reliability Verification System 200)

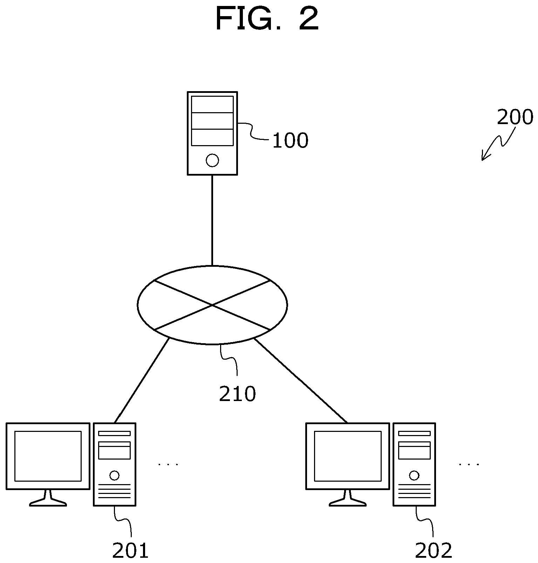

Next, an example of a reliability verification system 200, to which the information processing device 100 illustrated in FIG. 1 is applied, will be described with reference to FIG. 2.

FIG. 2 is an explanatory diagram illustrating an example of the reliability verification system 200. In FIG. 2, the reliability verification system 200 includes the information processing device 100, a transmission-side device 201, and a reception-side device 202.

In the reliability verification system 200, the information processing device 100 and the transmission-side device 201 are coupled via a wired or wireless network 210. The network 210 is, for example, a local area network (LAN), a wide area network (WAN), the Internet, or the like.

Furthermore, in the reliability verification system 200, the information processing device 100 and the reception-side device 202 are coupled via the wired or wireless network 210. Furthermore, in the reliability verification system 200, the transmission-side device 201 and the reception-side device 202 are coupled via the wired or wireless network 210.

The information processing device 100 implements trust as a service (TaaS). When the transmission-side device 201 detects a specific operation is performed on the document, the information processing device 100 performs control to create a signature regarding the document and add the signature to the document. The document is stored, for example, in a specific storage region, using a document sharing service. The specific storage region is, for example, a cloud. When receiving a verification request from the reception-side device 202, the information processing device 100 verifies the reliability of the document. The information processing device 100 transmits the result of verifying the reliability of the document to the reception-side device 202. The information processing device 100 is, for example, a server, a personal computer (PC), or the like.

The transmission-side device 201 is a computer provided on a transmission side of the document. The transmission-side device 201 creates or updates the document, for example, according to a user's operation. For example, a signature is added to the document by the information processing device 100. The transmission-side device 201 transmits the document to which the signature is added to the reception-side device 202, for example, according to a user's operation. Any one of the transmission-side devices 201 has a function as a mail server, and manages the transmission of the document from another transmission-side device 201 to the reception-side device 202. The transmission-side device 201 is, for example, a server, a PC, a tablet terminal, a smartphone, or the like.

The reception-side device 202 is a computer provided on a reception side of the document. The reception-side device 202 receives a document to which a signature is added from the transmission-side device 201, for example. Any one of the reception-side devices 202 has a function as a mail server and manages the transmission of the document from the transmission-side device 201 to another reception-side device 202. The reception-side device 202 transmits a verification request for the received document to the information processing device 100. The reception-side device 202 is, for example, a server, a PC, a tablet terminal, a smartphone, or the like.

Here, a case has been described where the information processing device 100 is a device different from the transmission-side device 201. However, the present invention is not limited to this. For example, there may be a case where the information processing device 100 is integrated with the transmission-side device 201 and has a function as the transmission-side device 201.

Furthermore, here, a case has been described where the information processing device 100 is a device different from the reception-side device 202. However, the present invention is not limited to this. For example, there may be a case where the information processing device 100 is integrated with the reception-side device 202 and has a function as the reception-side device 202.

Furthermore, here, for convenience of explanation, a case has been described where the transmission-side device 201 does not have the function as the reception-side device 202. However, the present invention is not limited to this. For example, there may be a case where the transmission-side device 201 has the function as the reception-side device 202.

Furthermore, here, a case has been described where the reliability verification system 200 includes one information processing device 100. However, the present invention is not limited to this. For example, there may be a case where the reliability verification system 200 includes the plurality of information processing devices 100.

### (Hardware Configuration Example of Information Processing Device 100)

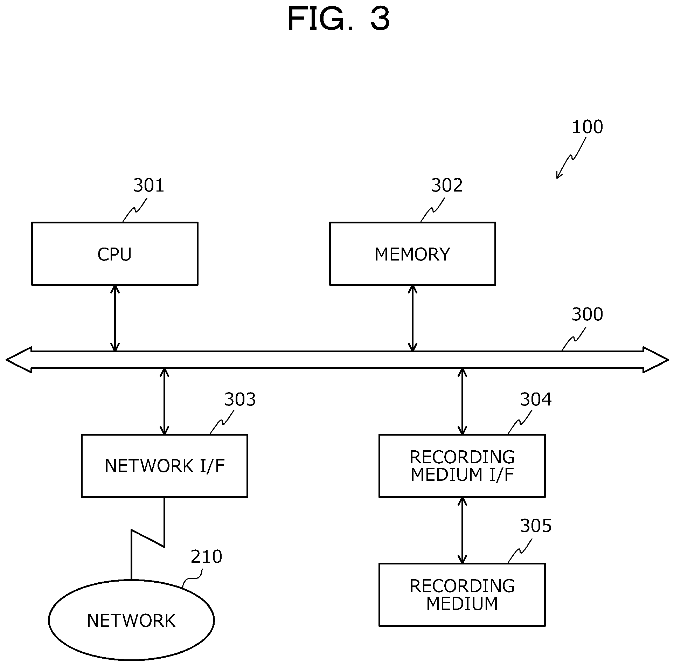

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network interface (I/F) 303, a recording medium I/F 304, and a recording medium 305. Furthermore, the individual components are coupled to each other by a bus 300.

Here, the CPU 301 performs overall control of the information processing device 100. The memory 302 includes, for example, a read only memory (ROM), a random access memory (RAM), a flash ROM, or the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is coupled to the network 210 through a communication line, and is coupled to another computer via the network 210. Then, the network I/F 303 manages an interface between the network 210 and the inside, and controls input/output of data to/from another computer. The network I/F 303 is, for example, a modem, a LAN adapter, or the like.

The recording medium I/F 304 controls reading/writing of data from/to the recording medium 305 under the control of the CPU 301. The recording medium I/F 304 is, for example, a disk drive, a solid state drive (SSD), a universal serial bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be attachable to and detachable from the information processing device 100.

For example, the information processing device 100 may include a keyboard, a mouse, a display, a printer, a scanner, a microphone, a speaker, or the like, in addition to the components described above. Furthermore, the information processing device 100 may include a plurality of the recording medium I/Fs 304 and the recording media 305. Furthermore, the information processing device 100 does not have to include the recording medium I/F 304 or the recording medium 305.

### (Storage Content of Common DataBase (DB) 400)

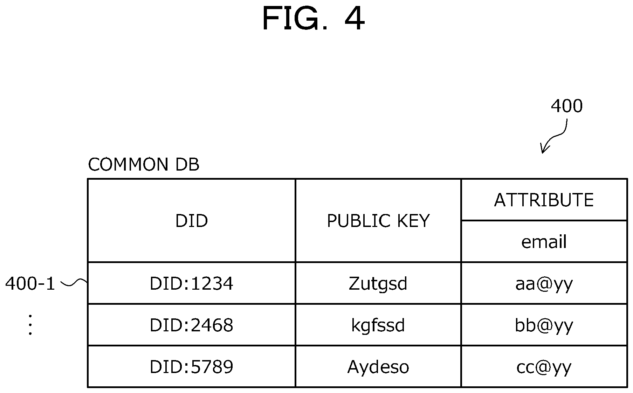

Next, an example of storage content of a common DB 400 will be described with reference to FIG. 4. The common DB 400 is implemented by a storage region such as the memory 302 or the recording medium 305 of the information processing device 100 illustrated in FIG. 3, for example.

FIG. 4 is an explanatory diagram illustrating an example of the storage content of the common DB 400. As illustrated in FIG. 4, the common DB 400 includes fields of a decentralized identity (DID), a public key, and an attribute. In the common DB 400, public key information is stored as a record 400-a by setting information to each field for each public key. The reference a is an arbitrary integer.

In the field of the DID, a DID to be added to a pair of a public key and a private key is set. A public key is set in the field of the public key. An attribute of the public key is set in the field of the attribute. In the example in FIG. 4, the attribute is an email, and an email corresponding to the public key is set in the field of the attribute. Specifically, in the field of the attribute, an email corresponding to a creator who creates or updates a document to which a signature is added with the public key is set.

### (Storage Content of Public Key Pattern DB 500)

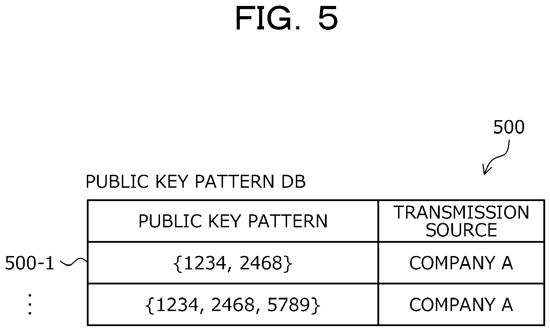

Next, an example of storage content of a public key pattern DB 500 will be described with reference to FIG. 5. The public key pattern DB 500 is implemented by the storage region such as the memory 302 or the recording medium 305 of the information processing device 100 illustrated in FIG. 3, for example.

FIG. 5 is an explanatory diagram illustrating an example of the storage content of the public key pattern DB 500. As illustrated in FIG. 5, the public key pattern DB 500 includes fields of a public key pattern and a transmission source. In the public key pattern DB 500, public key pattern information is stored as a record 500-b by setting information to each field for each public key pattern. The reference b is an arbitrary integer.

In the field of the public key pattern, a combination of public keys respectively used to create one or a plurality of signatures regarding the document is set. In the field of the public key pattern, for example, the combination of the public keys respectively used to create the one or plurality of signatures regarding the document may be set so as to determine an order of the public keys used for creation. In the field of the transmission source, a transmission source of the document described above regarding the one or the plurality of signatures described above is set.

### (Storage Content of Random Number Management DB 600)

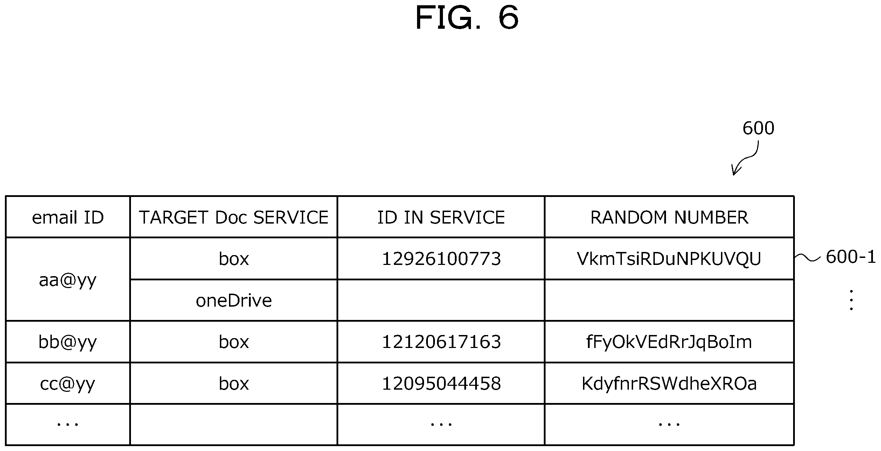

Next, an example of storage content of a random number management DB 600 will be described with reference to FIG. 6. The random number management DB 600 is implemented by the storage region such as the memory 302 or the recording medium 305 of the information processing device 100 illustrated in FIG. 3, for example.

FIG. 6 is an explanatory diagram illustrating an example of the storage content of the random number management DB 600. As illustrated in FIG. 6, the random number management DB 600 includes fields of an email ID, a target Doc service, an ID in the service, and a random number. The random number management DB 600 stores random number information as a record 600-c by setting information to each field for each email ID. The reference c is an arbitrary integer.

In the field of the email ID, an email corresponding to the creator who creates or updates the document is set. In the field of the target Doc service, a type of a document sharing service that is used by the creator described above and stores the document described above in a specific storage region is set. In the field of the ID in the service, an ID that enables to identify the creator described above in the document sharing service described above is set. In the field of the random number, a random number written into the specific storage region is set.

### (Storage Content of Target Event List 700)

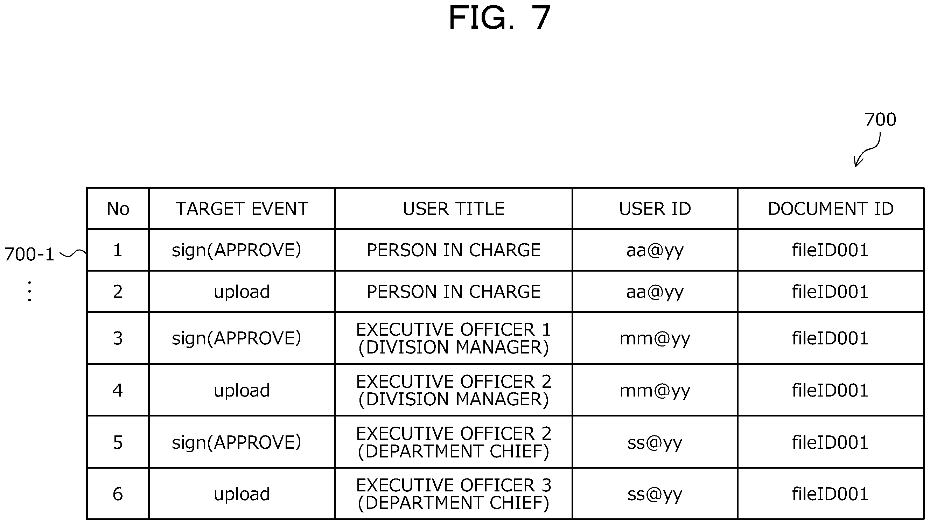

Next, an example of storage content of a target event list 700 will be described with reference to FIG. 7. The target event list 700 is implemented by the storage region such as the memory 302 or the recording medium 305 of the information processing device 100 illustrated in FIG. 3, for example.

FIG. 7 is an explanatory diagram illustrating an example of the storage content of the target event list 700. As illustrated in FIG. 7, the target event list 700 includes fields of a number, a target event, a user title, a user ID, an a document ID. The target event list 700 stores target event information as a record 700-d by setting information to each field for each target event. The reference d is an arbitrary integer.

In the field of the number, a number assigned to the target event information is set. In the field of the target event, a target event is set. In the field of the user title, a user title that is the attribute of the creator who creates or updates the document is set. In the field of the user ID, a user ID used to identify the creator who creates or updates the document is set. The user ID is, for example, an email. In the field of the document ID, a document ID used to identify the document is set.

### (Hardware Configuration Example of Transmission-side Device 201)

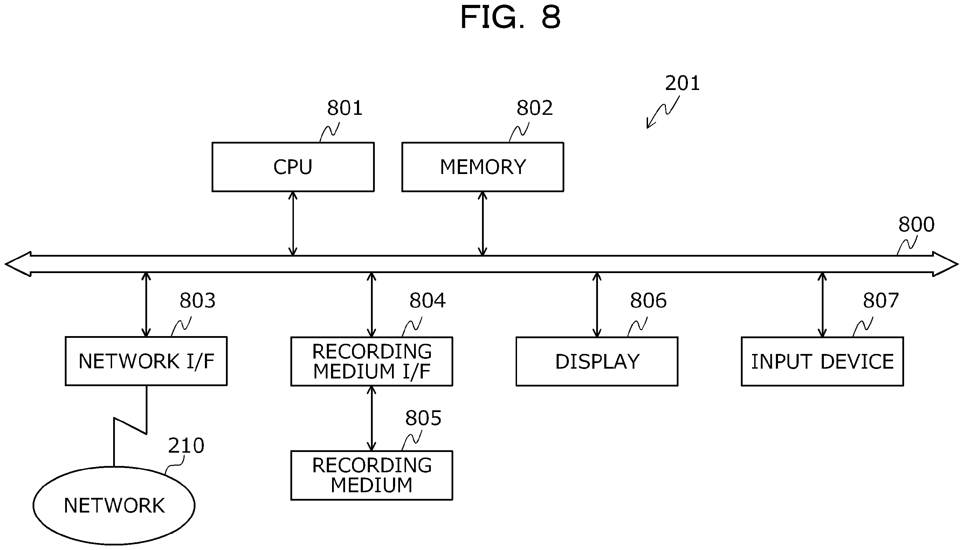

Next, a hardware configuration example of the transmission-side device 201 included in the reliability verification system 200 illustrated in FIG. 2 will be described with reference to FIG. 8.

FIG. 8 is a block diagram illustrating the hardware configuration example of the transmission-side device 201. In FIG. 8, the transmission-side device 201 includes a CPU 801, a memory 802, a network I/F 803, a recording medium I/F 804, a recording medium 805, a display 806, and an input device 807. Furthermore, the individual components are coupled to each other by a bus 800.

Here, the CPU 801 performs overall control of the transmission-side device 201. The memory 802 includes, for example, a ROM, a RAM, a flash ROM, or the like. Specifically, for example, the flash ROM or the ROM stores various programs, and the RAM is used as a work area for the CPU 801. The programs stored in the memory 802 are loaded into the CPU 801 to cause the CPU 801 to execute coded processing.

The network I/F 803 is coupled to the network 210 through a communication line, and is coupled to another computer via the network 210. Then, the network I/F 803 manages an interface between the network 210 and the inside, and controls input/output of data to/from another computer. The network I/F 803 is, for example, a modem, a LAN adapter, or the like.

The recording medium I/F 804 controls reading/writing of data from/to the recording medium 805 under the control of the CPU 801. The recording medium I/F 804 is, for example, a disk drive, an SSD, a USB port, or the like. The recording medium 805 is a nonvolatile memory that stores data written under the control of the recording medium I/F 804. The recording medium 805 is, for example, a disk, a semiconductor memory, a USB memory, or the like. The recording medium 805 may be attachable to and detachable from the transmission-side device 201.

The display 806 displays data such as writings, images, or function information, as well as a cursor, an icon, or a tool box. The display 806 is, for example, a cathode ray tube (CRT), a liquid crystal display, an organic electroluminescence (EL) display, or the like. The input device 807 has keys for inputting characters, numbers, various instructions, or the like, and inputs data. The input device 807 may be a keyboard, a mouse, or the like, or may be a touch-panel input pad, a numeric keypad, or the like.

The transmission-side device 201 may include, for example, a printer, a scanner, a microphone, a speaker, and the like, in addition to the above-described components. Furthermore, the transmission-side device 201 may include a plurality of the recording medium I/Fs 804 and the recording media 805. Furthermore, the transmission-side device 201 does not have to include the recording medium I/F 804 or the recording medium 805.

### (Hardware Configuration Example of Reception-side Device 202)

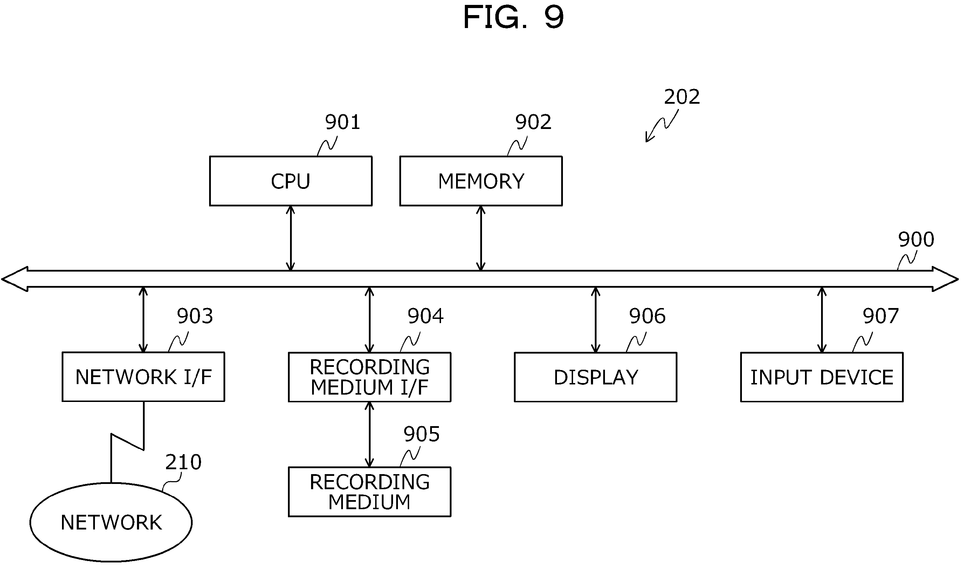

Next, a hardware configuration example of the reception-side device 202 included in the reliability verification system 200 illustrated in FIG. 2 will be described with reference to FIG. 9.

FIG. 9 is a block diagram illustrating the hardware configuration example of the reception-side device 202. In FIG. 9, the reception-side device 202 includes a CPU 901, a memory 902, a network I/F 903, a recording medium I/F 904, a recording medium 905, a display 906, and an input device 907. Furthermore, the individual components are coupled to one another by a bus 900.

Here, the CPU 901 performs overall control of the reception-side device 202. The memory 902 includes, for example, a ROM, a RAM, a flash ROM, and the like. Specifically, for example, the flash ROM or the ROM stores various programs, and the RAM is used as a work area for the CPU 901. The programs stored in the memory 902 are loaded into the CPU 901 to cause the CPU 901 to execute coded processing.

The network I/F 903 is coupled to the network 210 through a communication line, and is coupled to another computer through the network 210. Then, the network I/F 903 manages an interface between the network 210 and the inside, and controls input/output of data to/from another computer. The network I/F 903 is, for example, a modem, a LAN adapter, or the like.

The recording medium I/F 904 controls reading/writing of data from/to the recording medium 905 under the control of the CPU 901. The recording medium I/F 904 is, for example, a disk drive, an SSD, a USB port, or the like. The recording medium 905 is a nonvolatile memory that stores data written under the control of the recording medium I/F 904. The recording medium 905 is, for example, a disk, a semiconductor memory, a USB memory, or the like. The recording medium 905 may be attachable to and detachable from the reception-side device 202.

The display 906 displays data such as writings, images, or function information, as well as a cursor, an icon, or a tool box. The display 906 is, for example, a cathode ray tube (CRT), a liquid crystal display, an organic electroluminescence (EL) display, or the like. The input device 907 has keys for inputting characters, numbers, various instructions, or the like, and inputs data. The input device 907 may be a keyboard, a mouse, or the like, or may be a touch-panel input pad, a numeric keypad, or the like.

The reception-side device 202 may include, for example, a printer, a scanner, a microphone, a speaker, and the like, in addition to the above-described components. Furthermore, the reception-side device 202 may include a plurality of the recording medium I/Fs 904 and the recording media 905. Furthermore, the reception-side device 202 does not have to include the recording medium I/F 904 or the recording medium 905.

### (Functional Configuration Example of Reliability Verification System 200)

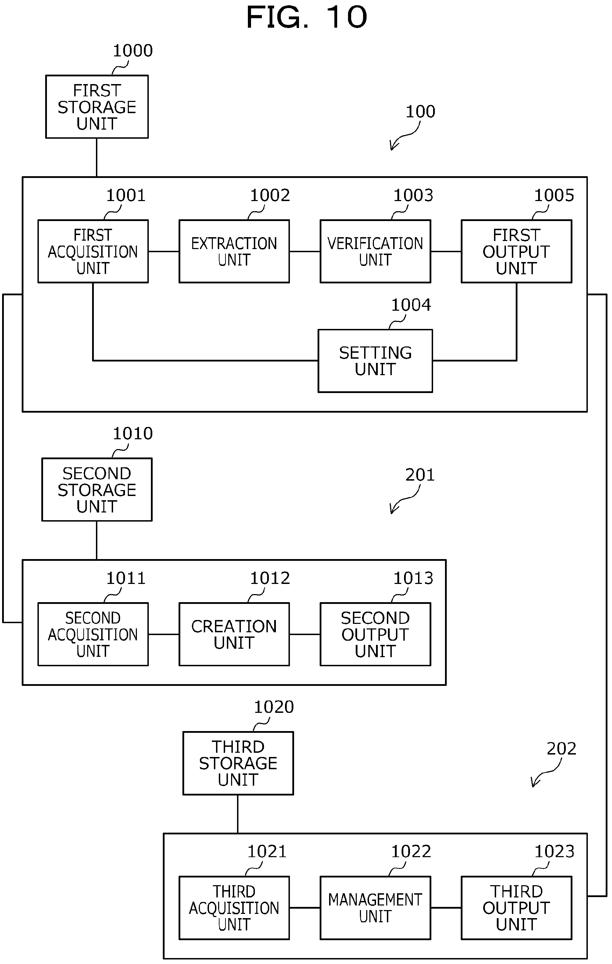

Next, a functional configuration example of the reliability verification system 200 will be described with reference to FIG. 10.

FIG. 10 is a block diagram illustrating the functional configuration example of the reliability verification system 200. In FIG. 10, the information processing device 100 includes a first storage unit 1000, a first acquisition unit 1001, an extraction unit 1002, a verification unit 1003, a setting unit 1004, and a first output unit 1005.

The first storage unit 1000 is implemented by, for example, the storage region such as the memory 302 or the recording medium 305 illustrated in FIG. 3. Hereinafter, a case where the first storage unit 1000 is included in the information processing device 100 will be described. However, the present invention is not limited to this. For example, the first storage unit 1000 may be included in a device different from the information processing device 100, and there may be a case where content stored in the first storage unit 1000 can be referred from the information processing device 100.

The first acquisition unit 1001 to the first output unit 1005 function as an example of a control unit. Specifically, for example, the first acquisition unit 1001 to the first output unit 1005 implement functions thereof by causing the CPU 301 to execute a program stored in the storage region such as the memory 302 or the recording medium 305 or by the network I/F 303 illustrated in FIG. 3. A processing result of each functional unit is stored in, for example, the storage region such as the memory 302 or the recording medium 305 illustrated in FIG. 3.

The first storage unit 1000 stores various types of information to be referred or updated in processing of each functional unit. The first storage unit 1000 stores signature pattern information that represents features of one or a plurality of signatures regarding a document acquired in the past in association with a transmission source of the document. The signature may be, for example, an aggregate signature.

The signature pattern information represents, for example, a feature of a combination of key information used to create the one or the plurality of signatures. Specifically, the signature pattern information represents the combination of the key information used to create the one or the plurality of signatures as a feature of the one of the plurality of signatures. Specifically, the signature pattern information represents information indicating the combination of the key information used to create the one or the plurality of signatures so as to distinguish an order relationship in which the key information is used to create the signature regarding the document, as the feature of the one or the plurality of signatures.

The signature pattern information represents a feature of a combination of attributes of creators of the one of the plurality of signatures, for example. The creator is, for example, a signer. Specifically, the signature pattern information represents a combination of the creators of the one or the plurality of signatures as the feature of the one or the plurality of signatures. Specifically, the signature pattern information represents information indicating the combination of the creators of the one or the plurality of signatures so as to distinguish an order relationship of a timing when the signature regarding the document is created as the feature of the one or the plurality of signatures.

The signature regarding the document is, for example, a signature attached to a document. The document is, for example, information indicating writing. The document may be, for example, information indicating an image or an execution file, in addition to writings.

The document is, for example, information attached to an email and to be transmitted. The document is transmitted from the transmission-side device 201 to the reception-side device 202, for example. The document is stored, for example, in a specific storage region, using a document sharing service. The specific storage region exists, for example, in a cloud.

The document may be transmitted from the transmission-side device 201 to the reception-side device 202 via an application. The document may be transmitted from the transmission-side device 201 to the reception-side device 202 via the document sharing service.

For example, the first storage unit 1000 may store a weight based on the number of documents, transmitted in the past, regarding one or a plurality of signatures having a certain feature and signature pattern information representing the feature in association with a transmission source of each document. The weight indicates a strength of reliability. For example, a value of the weight increases as the number of documents transmitted in the past is larger. For example, the value of the weight may be set to increase as the number of signatures included in the plurality of signatures having the feature represented by the signature pattern information is larger. For example, the weight may be set based on a type of each of the plurality of signatures having the feature represented by the signature pattern information.

The first acquisition unit 1001 acquires various types of information to be used for the processing of each functional unit. The first acquisition unit 1001 stores the acquired various types of information in the first storage unit 1000 or outputs the various types of information to each functional unit. Furthermore, the first acquisition unit 1001 may output various types of information stored in the first storage unit 1000 to each functional unit. The first acquisition unit 1001 acquires various types of information based on, for example, a user's operation input. The first acquisition unit 1001 may receive various types of information from a device different from the information processing device 100, for example.

The first acquisition unit 1001 acquires a transmission source of a document and signature pattern information that represents a feature of one or a plurality of signatures regarding the document. The first acquisition unit 1001 acquires the transmission source of the document and the signature pattern information that represents the feature of the one or the plurality of signatures regarding the document, for example, from a transmission destination of the document. For example, the first acquisition unit 1001 stores the acquired signature pattern information that represents the feature of the one or the plurality of signatures regarding the document in the first storage unit 1000, in association with the transmission source of the document. For example, the first acquisition unit 1001 may refer to a history of signatures added to the document by the setting unit 1004 and acquire the signature pattern information that represents the feature of the one or the plurality of signatures regarding the document.

For example, the first acquisition unit 1001 determines whether or not the number of documents transmitted in the past, regarding one or a plurality of signatures having a certain feature, is equal to or more than a threshold. For example, in a case where the number of documents transmitted in the past, regarding the one or the plurality of signatures having a certain feature, is equal to or more than the threshold, the first acquisition unit 1001 may store the signature pattern information representing the feature in the first storage unit 1000, in association with the transmission source of each of the documents. As a result, the first acquisition unit 1001 can select signature pattern information that is determined to have a high possibility of representing a feature of one or a plurality of valid signatures and store the signature pattern information in the first storage unit 1000. Therefore, the first acquisition unit 1001 can make it easier to improve accuracy of verifying reliability of a target document.

For example, the first acquisition unit 1001 acquires a transmission source of the target document and first signature pattern information that represents the feature of the one or the plurality of signatures regarding the target document. Specifically, the first acquisition unit 1001 acquires the transmission source of the target document and the first signature pattern information that represents the feature of the one or the plurality of signatures regarding the target document, from a transmission destination of the target document. More specifically, the first acquisition unit 1001 acquires the transmission source of the target document and the first signature pattern information that represents the feature of the one or the plurality of signatures regarding the target document by receiving them from the reception-side device 202.

The first acquisition unit 1001 acquires, for example, a target document. Specifically, the first acquisition unit 1001 acquires the target document from the transmission destination of the target document. More specifically, the first acquisition unit 1001 acquires the target document by receiving the target document from the reception-side device 202. The first acquisition unit 1001 may acquire the transmission source of the target document by specifying the transmission source of the target document based on the acquired target document.

The first acquisition unit 1001 acquires random number information. The first acquisition unit 1001 acquires the random number information by receiving the random number information from the transmission source of the target document, for example, at a predetermined timing. For example, the predetermined timing is set by a user in advance. For example, the predetermined timing is a fixed time point every day or the like.

The first acquisition unit 1001 may receive a start trigger to start processing of any one of the functional units. The start trigger is, for example, a predetermined operation input by the user. The start trigger may be, for example, reception of predetermined information from another computer. The start trigger may be, for example, output of predetermined information by any one of the functional units.

Specifically, the first acquisition unit 1001 may receive acquisition of the transmission source of the target document and the first signature pattern information as a start trigger to start processing of the extraction unit 1002, the verification unit 1003, and the setting unit 1004. Specifically, the first acquisition unit 1001 may receive acquisition of the transmission source of the document and the signature pattern information that represents the feature of the one or the plurality of signatures regarding the document as a start trigger to start processing of a storage unit.

The extraction unit 1002 extracts second signature pattern information associated with the transmission source of the target document, from the first storage unit 1000. For example, the second signature pattern information represents a feature of one or a plurality of signatures regarding a document that is transmitted to a transmission destination same as that of the target document. The second signature pattern information may represent a feature of one or a plurality of signatures regarding a document that is transmitted to a transmission destination different from that of the target document. As a result, the extraction unit 1002 can extract the first signature pattern information that represents a valid feature of one or a plurality of signatures to be a reference of verifying the reliability of the target document.

The verification unit 1003 verifies the reliability of the target document, based on a result of comparing the acquired first signature pattern information and the extracted second signature pattern information.

For example, in a case where the acquired first signature pattern information matches the extracted second signature pattern information, the verification unit 1003 determines that the target document has reliability. On the other hand, for example, in a case where the acquired first signature pattern information does not match the extracted second signature pattern information, the verification unit 1003 determines that the target document does not have reliability. As a result, the verification unit 1003 can accurately verify the reliability of the target document.

The verification unit 1003 refers to the first storage unit 1000 and verifies the reliability of the target document, based on the result of comparing the acquired first signature pattern information and the extracted second signature pattern information and a weight corresponding to the extracted second signature pattern information.

For example, in a case where the acquired first signature pattern information matches the extracted second signature pattern information, the verification unit 1003 determines that the target document has reliability. Moreover, for example, the verification unit 1003 sets the weight corresponding to the extracted second signature pattern information as a strength of the reliability of the target document. On the other hand, for example, in a case where the acquired first signature pattern information does not match the extracted second signature pattern information, the verification unit 1003 determines that the target document does not have reliability.

As a result, the verification unit 1003 can accurately verify the reliability of the target document. Furthermore, the verification unit 1003 can set the strength of the reliability of the target document and enables the reception side of the target document to easily verify the reliability of the target document.

The verification unit 1003 may verify the reliability of the transmission source of the target document, at each predetermined timing. For example, the verification unit 1003 writes the random number information into a specific storage region that can be referred from the transmission source of the target document. Then, for example, the verification unit 1003 verifies the reliability of the transmission source of the target document, based on a result of comparing the random number information written into the specific storage region and the random number information acquired from the transmission source of the target document, at a predetermined timing.

Specifically, in a case where the random number information written into the specific storage region matches the random number information acquired from the transmission source of the target document, the verification unit 1003 determines that the transmission source of the target document has reliability. On the other hand, specifically, in a case where the random number information written into the specific storage region does not match the random number information acquired from the transmission source of the target document, the verification unit 1003 determines that the transmission source of the target document does not have reliability. As a result, the verification unit 1003 can verify the reliability of the transmission source of the target document at each predetermined timing and prevent hacking of the transmission source of the target document.

The setting unit 1004 detects that a specific operation is performed on the document at the transmission source of the document. The transmission source is, for example, the transmission-side device 201. The specific operation is, for example, an operation for approving the document. The specific operation is, for example, an operation for updating content of the document by X% or more. The reference X is a preset threshold. The specific operation is, for example, an operation for explicitly requesting signature creation. The specific operation is, for example, an operation for saving the document as a final version.

In a case of detecting that the specific operation is performed on the document, the setting unit 1004 controls the transmission source of the document so as to transmit the document to the transmission destination of the document in a state where the document is set to be a reliability verification target. For example, the setting unit 1004 controls the transmission source of the document so as to add flag information indicating the reliability verification target to the document, and then, transmit the document after addition to the transmission destination of the document.

As a result, the setting unit 1004 can determine whether or not is it preferable to assume the received document as the reliability verification target at the transmission destination of the document. Therefore, the setting unit 1004 can reduce a processing load on the transmission destination of the document. Furthermore, the setting unit 1004 can reduce opportunities that the transmission destination of the document requests the information processing device 100 to verify the reliability of the document and reduce a processing load on the information processing device 100.

After verifying the reliability of the document, the setting unit 1004 controls the transmission destination of the document to exclude the document from the reliability verification target. The transmission destination is, for example, the reception-side device 202. For example, the setting unit 1004 controls the transmission destination of the document so as to remove the flag information indicating the reliability verification target from the document.

For example, the setting unit 1004 may transmit a message to a user at the transmission destination of the document, to exclude the document from the reliability verification target. Furthermore, the setting unit 1004 may store a name of the document to be excluded from the reliability verification target, control the verification unit 1003 so as not to verify reliability of the document of which the name has been stored, and notify the transmission destination of the document of that verification is not performed.

As a result, the setting unit 1004 can prevent the document from repeatedly being the reliability verification target at the transmission destination of the document and reduce the processing load on the transmission destination of the document. Furthermore, the setting unit 1004 can reduce the opportunities that the transmission destination of the document requests the information processing device 100 to verify the reliability of the document and reduce the processing load on the information processing device 100.

In a case of detecting that the specific operation is performed on the document at the transmission source of the document, the setting unit 1004 creates a signature regarding the document. Then, the setting unit 1004 controls the transmission source of the document so as to add the created signature to the document.

As a result, the setting unit 1004 can reduce the workload on the transmission source of the document. Furthermore, the setting unit 1004 can create the signature if the creator of the document does not explicitly create the signature and can reduce the workload on the creator of the document. Furthermore, the setting unit 1004 can reduce the number of the signatures to be created and can reduce a load for managing the key information and the signature pattern information.

The first output unit 1005 outputs a processing result of at least any one of the functional units. An output format is, for example, display on a display, print output to a printer, transmission to an external device by the network I/F 303, or storage in the storage region such as the memory 302 or the recording medium 305. This allows the first output unit 1005 to notify the user of the processing result of at least any one of the functional units, and it is possible to enhance convenience of the information processing device 100.

The first output unit 1005 outputs the result of verifying the reliability of the target document in association with the target document. For example, the first output unit 1005 transmits the result of verifying the reliability of the target document to the transmission destination of the target document, in association with the target document. As a result, the first output unit 1005 can easily recognize the reliability of the target document at the transmission destination of the target document.

Furthermore, the transmission-side device 201 includes a second storage unit 1010, a second acquisition unit 1011, a creation unit 1012, a second output unit 1013. The second storage unit 1010 is implemented by, for example, a storage region such as the memory 802 or the recording medium 805 illustrated in FIG. 8. Hereinafter, a case will be described where the second storage unit 1010 is included in the transmission-side device 201. However, the present invention is not limited to this. For example, there may be a case where the second storage unit 1010 is included in a device different from the transmission-side device 201 and storage content of the second storage unit 1010 can be referred from the transmission-side device 201.

The second acquisition unit 1011 to the second output unit 1013 function as an example of a control unit. Specifically, for example, the second acquisition unit 1011 to the second output unit 1013 implement functions thereof by causing the CPU 801 to execute a program stored in the storage region such as the memory 802, the recording medium 805, or the like illustrated in FIG. 8 or by the network I/F 803. A processing result of each functional unit is stored in, for example, the storage region such as the memory 802 or the recording medium 805 illustrated in FIG. 8.

The second storage unit 1010 stores various types of information to be referred to or updated in processing of each functional unit. The second storage unit 1010 stores, for example, a document. The second storage unit 1010 stores, for example, a document to which one or a plurality of signatures is added. Specifically, the second storage unit 1010 stores an email attached with a document to which one or a plurality of signatures is added.

For example, the second storage unit 1010 stores flag information indicating a reliability verification target in association with the document. Specifically, the second storage unit 1010 stores the flag information in association with the document attached to the email, by setting the flag information indicating the reliability verification target to a header of the email.

The second acquisition unit 1011 acquires various types of information to be used for the processing of each functional unit. The second acquisition unit 1011 stores the acquired various types of information in the second storage unit 1010 or outputs the various types of information to each functional unit. Furthermore, the second acquisition unit 1011 may output the various types of information stored in the second storage unit 1010 to each functional unit. The second acquisition unit 1011 acquires various types of information based on, for example, a user's operation input. The second acquisition unit 1011 may receive various types of information from a device different from the transmission-side device 201, for example.

For example, the second acquisition unit 1011 acquires the signature to be added to the document by receiving that from the information processing device 100. The second acquisition unit 1011 acquires the signature by receiving the signature added to the document from the information processing device 100 when the specific operation is performed by the user, for example.

The creation unit 1012 creates or updates a document based on a user's operation input. The creation unit 1012 adds the received signature to the document. For example, when the user performs the specific operation, the creation unit 1012 adds the received signature to the document. The creation unit 1012 creates an email based on the user's operation input. The creation unit 1012 attaches the document to the email, based on the user's operation input.

The second output unit 1013 outputs a processing result of at least any one of the functional units. An output format is, for example, display on a display, print output to a printer, transmission to an external device by the network I/F 803, or storage in the storage region such as the memory 802 or the recording medium 805. For example, the second output unit 1013 transmits the email to the transmission destination of the document.

Furthermore, the reception-side device 202 includes a third storage unit 1020, a third acquisition unit 1021, a management unit 1022, and a third output unit 1023. The third storage unit 1020 is implemented by, for example, a storage region such as the memory 902 or the recording medium 905 illustrated in FIG. 9. Hereinafter, a case will be described where the third storage unit 1020 is included in the reception-side device 202. However, the present invention is not limited to this. For example, there may be a case where the third storage unit 1020 is included in a device different from the reception-side device 202 and storage content of the third storage unit 1020 can be referred from the reception-side device 202.

The third acquisition unit 1021 to the third output unit 1023 function as an example of a control unit. Specifically, for example, the third acquisition unit 1021 to the third output unit 1023 implement functions thereof by causing the CPU 901 to execute a program stored in a storage region such as the memory 902 or the recording medium 905 illustrated in FIG. 9 or by the network I/F 903. A processing result of each functional unit is stored in the storage region such as the memory 902 or the recording medium 905 illustrated in FIG. 9, for example.

The third storage unit 1020 stores various types of information to be referred to or updated in processing of each functional unit. The third storage unit 1020 stores, for example, a document. The third storage unit 1020 stores, for example, a document to which one or a plurality of signatures is added. Specifically, the third storage unit 1020 stores an email attached with a document to which one or a plurality of signatures is added.

For example, the third storage unit 1020 stores flag information indicating a reliability verification target in association with the document. Specifically, the third storage unit 1020 stores flag information indicating a reliability verification target associated with a document set to a header of an email and attached to the email.

The third acquisition unit 1021 acquires various types of information to be used for the processing of each functional unit. The third acquisition unit 1021 stores the acquired various types of information in the third storage unit 1020 or outputs the various types of information to each functional unit. Furthermore, the third acquisition unit 1021 may output the various types of information stored in the third storage unit 1020 to each functional unit. The third acquisition unit 1021 acquires various types of information, for example, based on a user's operation input. The third acquisition unit 1021 may receive various types of information from a device different from the reception-side device 202, for example.

The third acquisition unit 1021 acquires the email by receiving the email, for example. For example, the third acquisition unit 1021 acquires a result of verifying the reliability of the target document by receiving the result from the information processing device 100. For example, the third acquisition unit 1021 acquires an instruction to cancel the flag information indicating the reliability verification target by receiving the instruction from the information processing device 100.

The management unit 1022 deletes the flag information indicating the reliability verification target, under the control of the information processing device 100. For example, the management unit 1022 excludes the document attached to the email from the reliability verification target, by deleting the flag information indicating the reliability verification target from the header of the email.

The third output unit 1023 outputs a processing result of at least any one of the functional units. An output format is, for example, display on a display, print output to a printer, transmission to an external device by the network I/F 903, or storage in a storage region such as the memory 902 or the recording medium 905. For example, the third output unit 1023 transmits a transmission source of the document and signature pattern information that represents a feature of one or a plurality of signatures regarding the document to the information processing device 100.

Here, a case has been described where the first storage unit 1000 stores the signature pattern information that is determined to have a high possibility of representing a feature of one or a plurality of valid signatures. However, the present invention is not limited to this. For example, there may be a case where the first storage unit 1000 stores signature pattern information that is determined to have a high possibility of representing a feature of one or a plurality of invalid signatures.

In this case, for example, in a case where the first signature pattern information does not match the second signature pattern information, the verification unit 1003 determines that the target document has reliability. On the other hand, for example, in a case where the first signature pattern information and the second signature pattern information match, the verification unit 1003 determines that the target document does not have reliability.

### (Flow of Operation of Reliability Verification System 200)

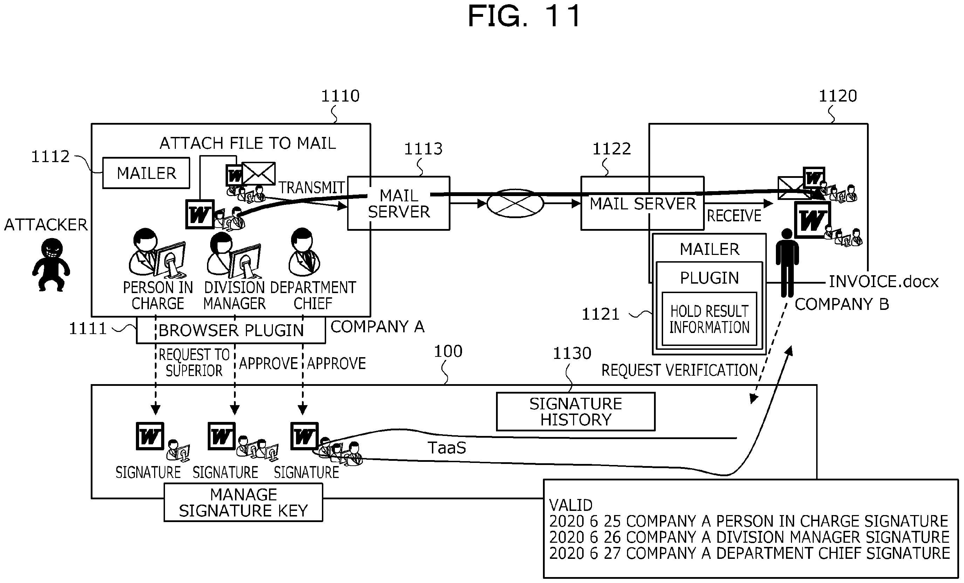

Next, a flow of an operation of the reliability verification system 200 will be described with reference to FIG. 11.

FIG. 11 is an explanatory diagram illustrating the flow of the operation of the reliability verification system 200. In FIG. 11, a transmission side 1110 is, for example, a company A. At the transmission side 1110, the transmission-side device 201 includes a browser plugin 1111 and a mailer 1112. One of the transmission-side devices 201 operates as a mail server 1113.

Furthermore, a reception side 1120 is, for example, a company B. At the reception side 1120, the reception-side device 202 includes a mailer plugin 1121. One of the reception-side devices 202 operates as a mail server 1122. Furthermore, the information processing device 100 implements a TaaS. The information processing device 100 cooperates with the browser plugin 1111 and the mailer plugin 1121.

The transmission-side device 201 used by a person in charge performs an operation to request a superior on the document. The document is stored in a cloud, for example, using the document sharing service. When detecting that the operation to request the superior is performed via the browser plugin 1111, the information processing device 100 generates a signature corresponding to the person in charge and adds the signature to the document. The information processing device 100 manages a public key used when the signature is created.

Next, the transmission-side device 201 used by a department chief performs an operation for approving the document. When detecting that the approval operation is performed via the browser plugin 1111, the information processing device 100 generates a signature corresponding to the department chief and adds the signature to the document. The information processing device 100 manages a public key used when the signature is created.

Next, the transmission-side device 201 used by a division manager performs an operation for approving the document. When detecting that the approval operation is performed via the browser plugin 1111, the information processing device 100 generates a signature corresponding to the division manager and adds the signature to the document. The information processing device 100 manages a public key used when the signature is created. The transmission-side device 201 used by the division manager creates an email attached with the document, using the mailer 1112 and transmits the email to the reception-side device 202 via the mail servers 1113 and 1122.

The reception-side device 202 receives the email. When the email is opened and the document attached to the email is acquired using the mailer plugin 1121, the reception-side device 202 transmits a request for verifying reliability of the document to the information processing device 100. For example, the request includes a document and signature pattern information that represents a feature of one or a plurality of signatures added to the document. The signature pattern information indicates, for example, signers indicated by the respective signatures in order in which each signature is added.

For example, the reception-side device 202 determines whether or not the flag information indicating that an email is a reliability verification target is set to a header of the email using the mailer plugin 1121. Then, for example, if the flag information is set using the mailer plugin 1121, when the document attached to the email is acquired, the reception-side device 202 transmits a request for verifying reliability of the document to the information processing device 100.

The information processing device 100 includes a signature history 1130 that stores the signature pattern information that represents the feature of the one or the plurality of signatures added to the document in association with each transmission source of the document. The information processing device 100 receives the request and specifies a transmission source of the document included in the request. The information processing device 100 extracts signature pattern information corresponding to the specified transmission source from the signature history 1130. The information processing device 100 determines whether or not the signature pattern information included in the request matches the extracted signature pattern information.

In the example in FIG. 11, since the information processing device 100 determines that the pieces of the signature pattern information match, the information processing device 100 determines that the document has reliability. The information processing device 100 transmits the determination result to the reception-side device 202. The reception-side device 202 outputs the determination result so that a user can refer to the result. Furthermore, the reception-side device 202 deletes the flag information that indicates that the email is the reliability verification target and is set to the header of the email, using the mailer plugin 1121.

As a result, the information processing device 100 can accurately verify the reliability of the document at the reception side 1120. The information processing device 100 can add the plurality of signatures to the document and can easily maintain the reliability of the document even if one of the transmission-side devices 201 is hacked by an attacker. Furthermore, the information processing device 100 can cause the reception-side device 202 to delete the flag information set to the header of the email. Therefore, hereinafter, the information processing device 100 can prevent the request for the document of which the reliability has been verified from being transmitted from the reception-side device 202 again and can reduce a workload.

The information processing device 100 can cause the transmission-side device 201 to set the flag information to the header of the email. Therefore, the information processing device 100 can easily determine whether or not to verify the reliability of the document attached to the email when the reception-side device 202 receives the email. Then, the information processing device 100 allows the reception-side device 202 not to verify reliability of some documents among the documents attached to the received email and can reduce a workload. Furthermore, the information processing device 100 allows the reception-side device 202 not to transmit a request for verifying the reliability, for some documents, to the information processing device 100 and can make it easier to ensure security.

Here, a case has been described where the reliability verification system 200 includes one information processing device 100. However, the present invention is not limited to this. For example, there may be a case where the reliability verification system 200 includes the plurality of information processing devices 100. In this case, the reception-side device 202 transmits the request for verifying the reliability of the document to each information processing device 100.

Furthermore, in this case, the plurality of information processing devices 100 may share the signature history 1130. Specifically, the plurality of information processing devices 100 may collect signature pattern information corresponding to the same transmission source respectively from different reception sides 1120, share the signature pattern information with another information processing device 100, and store the signature history 1130. On the other hand, in the reception-side device 202, the plurality of information processing devices 100 transmits the request for verifying the reliability of the document to any one of the information processing devices 100. As a result, the information processing device 100 can utilize the signature pattern information obtained from the plurality of different reception sides 1120 and improve the accuracy of verifying the reliability of the document.

### (Example of Operation of Reliability Verification System 200)

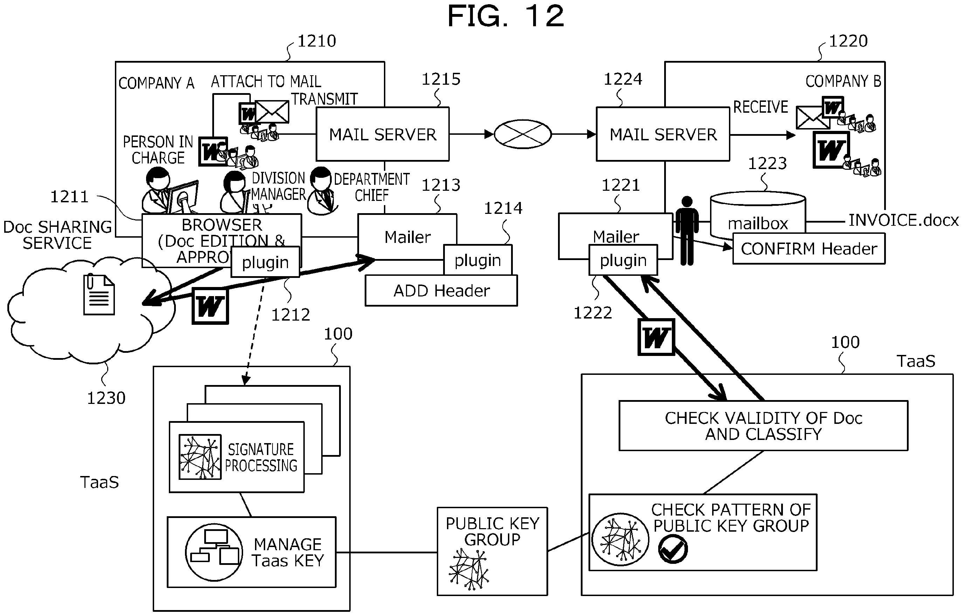

Next, an example of the operation of the reliability verification system 200 will be described with reference to FIGs. 12 to 14.

FIGs. 12 to 14 are explanatory diagrams illustrating an example of the operation of the reliability verification system 200. In FIG. 12, a transmission side 1210 is, for example, a company A. On the transmission side 1210, the transmission-side device 201 includes a browser 1211, a browser plugin 1212 included in the browser 1211, a mailer 1213, and a mailer plugin 1214. One of the transmission-side devices 201 operates as a mail server 1215.

Furthermore, a reception side 1220 is, for example, a company B. On the reception side 1220, the reception-side device 202 includes a mailer 1221, a mailer plugin 1222 included in the mailer 1221, and a mailbox 1223. One of the reception-side devices 202 operates as a mail server 1224. Furthermore, the information processing device 100 implements a TaaS. The information processing device 100 cooperates with the browser plugin 1212 and the mailer plugin 1222.

In the transmission-side device 201, a document is created or updated using the browser 1211. Furthermore, the transmission-side device 201 performs an operation such as a request to a superior, approval, or the like on the document, using the browser 1211. The document is stored in a cloud with a document sharing service 1230. When detecting that a specific operation is performed via the browser plugin 1212, the information processing device 100 generates a signature and adds the signature to the document. The specific operation is, for example, an operation of a request to a superior, approval, or the like.

The information processing device 100 manages a public key used when the signature to be added to the document is created. The information processing device 100 acquires signature pattern information by ordering public keys used when signatures to be added to the same document are created and manages the signature pattern information in the public key pattern DB 500 in association with a transmission source of the document. The transmission source is, for example, the transmission-side device 201 corresponding to a signer of the signature added to the document and the transmission-side device 201 in which the specific operation has been performed. The transmission-side device 201 creates an email attached with the document using the mailer 1213 and transmits the email to the reception-side device 202 via the mail servers 1215 and 1224.

The reception-side device 202 receives the email using the mailer 1221. When the email is opened and the document attached to the email is acquired using the mailer plugin 1222, the reception-side device 202 transmits a request for verifying reliability of the document to the information processing device 100. For example, the request includes a document, a transmission source of the document, and signature pattern information that represents a feature of one or a plurality of signatures added to the document. The signature pattern information indicates, for example, signers indicated by the respective signatures in order in which each signature is added.

For example, the reception-side device 202 determines whether or not the flag information indicating that an email is a reliability verification target is set to a header of the email using the mailer plugin 1222. Then, for example, if the flag information is set using the mailer plugin 1222, when the document attached to the email is acquired, the reception-side device 202 transmits a request for verifying reliability of the document to the information processing device 100.

The information processing device 100 receives the request and specifies a transmission source of the document included in the request. The transmission source is any one of the transmission-side devices 201. The information processing device 100 extracts signature pattern information corresponding to the specified transmission source from the public key pattern DB 500. The information processing device 100 determines whether or not the signature pattern information included in the request matches the extracted signature pattern information.

In the example in FIG. 12, since it is determined that the pieces of signature pattern information match, the information processing device 100 determines that the document has reliability. The information processing device 100 transmits the determination result to the reception-side device 202. The reception-side device 202 outputs the determination result so that a user can refer to the result, using the mailer 1221. Furthermore, the reception-side device 202 deletes the flag information that indicates that the email is the reliability verification target and is set to the header of the email, using the mailer plugin 1222.

As a result, the information processing device 100 can accurately verify the reliability of the document at the reception side 1220. The information processing device 100 can add the plurality of signatures to the document and can easily maintain the reliability of the document even if one of the transmission-side devices 201 is hacked by an attacker. Furthermore, the information processing device 100 can cause the reception-side device 202 to delete the flag information set to the header of the email. Therefore, hereinafter, the information processing device 100 can prevent the request for the document of which the reliability has been verified from being transmitted from the reception-side device 202 again and can reduce a workload.

The information processing device 100 can cause the transmission-side device 201 to set the flag information to the header of the email. Therefore, the information processing device 100 can easily determine whether or not to verify the reliability of the document attached to the email when the reception-side device 202 receives the email. Then, the information processing device 100 allows the reception-side device 202 not to verify reliability of some documents among the documents attached to the received email and can reduce a workload. Furthermore, the information processing device 100 allows the reception-side device 202 not to transmit a request for verifying the reliability, for some documents, to the information processing device 100 and can make it easier to ensure security.

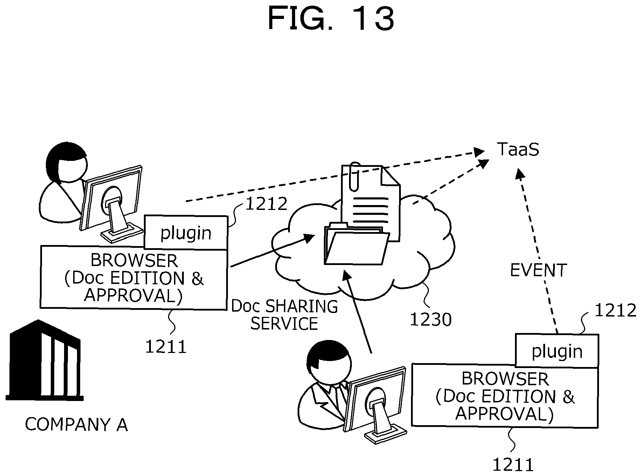

Next, proceeding to the description of FIG. 13, the document sharing service 1230 illustrated in FIG. 12 will be described. As illustrated in FIG. 13, the document sharing service 1230 is Box, DropBox, oneDrive, or the like. The document sharing service 1230 includes an API that controls operations of files or folders and grant of access authorities as a WebAPI. When sharing a folder with the plurality of transmission-side devices 201, the document sharing service 1230 broadcasts an operation event occurred under the folder to the plurality of transmission-side devices 201.

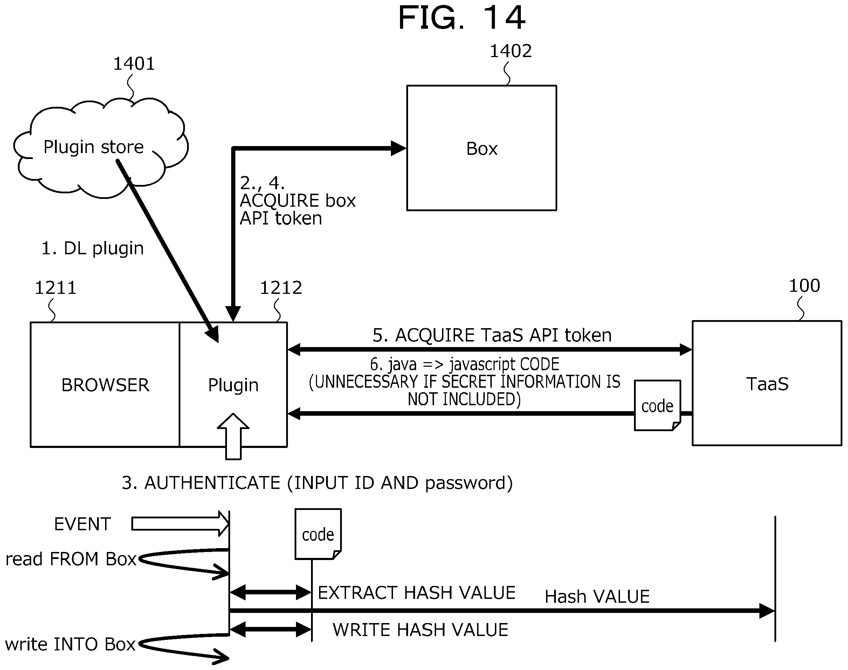

Next, proceeding to the description of FIG. 14, an example of an operation of the browser plugin 1212 in a case where the document sharing service 1230 is a Box 1402 will be described. As illustrated in FIG. 14, the browser 1211 downloads and implements the browser plugin 1212 from a plugin store 1401. The browser plugin 1212 acquires a box API token from the Box 1402. When a user inputs an ID and a password and is authenticated, the browser plugin 1212 can use the Box 1402 with the box API token.

The browser plugin 1212 acquires a TaaS API token from the information processing device 100 to be a TaaS. Furthermore, the browser plugin 1212 may acquire a Javascript code from the information processing device 100 to be the TaaS. The Javascript code is a code for calculating a hash value. In a case where a document in the Box 1402 does not include confidential information and there is no problem if the document is transmitted to the information processing device 100 to be the TaaS, the browser plugin 1212 does not need to acquire the Javascript code.

When detecting an event, the browser plugin 1212 reads a document from the Box 1402, extracts a hash value of the document using the Javascript code, and transmits the hash value to the information processing device 100 to be the TaaS. The event is, for example, that the specific operation is performed in the browser 1211. Furthermore, the browser plugin 1212 may write the extracted hash value into the Box 1402.

### (Specific Example of Operation of Reliability Verification System 200)

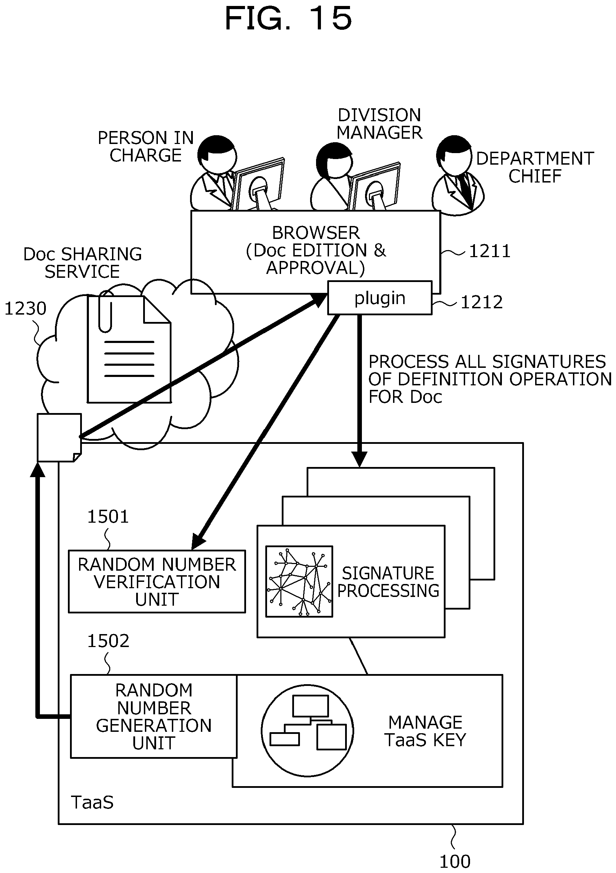

Next, a specific example of an operation of the reliability verification system 200 will be described with reference to FIGs. 15 to 17. For example, a specific example of an operation of each unit such as the browser plugin 1212, the mailer plugin 1214, or the mailer plugin 1222 illustrated in FIG. 12 will be described with reference to FIGs. 15 to 17.

FIGs. 15 to 17 are explanatory diagrams illustrating the specific examples of the operation of the reliability verification system 200. In FIG. 15, the browser plugin 1212 monitors an operation in the browser 1211 on a document managed by the document sharing service 1230 and detects that a specific operation is performed on the browser 1211. When detecting that the specific operation is performed in the browser 1211, the browser plugin 1212 transmits an event indicating that the specific operation is performed to the information processing device 100 to be the TaaS.

When receiving the event, the information processing device 100 to be the TaaS generates a signature and adds the signature to the document managed by the document sharing service 1230. A signer of the signature corresponds to, for example, a user of the transmission-side device 201 where the browser plugin 1212 that has transmitted the event this time exists.

Here, for example, a case is considered where the signature of which the signer is the user of the transmission-side device 201 where the browser plugin 1212 that has transmitted the event this time exists has been already added to the document managed by the document sharing service 1230. In this case, the information processing device 100 to be the TaaS does not need to newly generate a signature even if the information processing device 100 receives the event.

On the other hand, for example, a case is also considered where the signature of which the signer is the user of the transmission-side device 201 where the browser plugin 1212 that has transmitted the event this time exists has not been added to the document managed by the document sharing service 1230. In this case, the information processing device 100 to be the TaaS newly generates a signature and adds the signature to the document managed by the document sharing service 1230. As a result, the multiple signatures respectively by the different signers are added to the document managed by the document sharing service 1230.

The information processing device 100 to be the TaaS manages a public key used when a signature to be added to a document is created. The information processing device 100 to be the TaaS acquires signature pattern information by ordering public keys used when signatures added to the same document are created and manages the signature pattern information in the public key pattern DB 500 in association with a transmission source of the document. The transmission source is, for example, the transmission-side device 201 corresponding to a signer of the signature added to the document and the transmission-side device 201 in which the specific operation has been performed.

Furthermore, there may be a case where the information processing device 100 to be the TaaS confirms whether or not the browser plugin 1212 is used by an authorized user by a random number generation unit 1502 at each predetermined timing. For example, the information processing device 100 to be the TaaS prepares a personal folder of the user with the document sharing service 1230 in advance and writes random number information into the prepared personal folder with the random number generation unit 1502 at each predetermined timing. The information processing device 100 to be the TaaS saves the written random number information in the information processing device 100.

Then, the browser plugin 1212 reads the random number information from the personal folder and transmits the random number information to the information processing device 100 to be the TaaS. The information processing device 100 to be the TaaS determines whether or not the received random number information matches the saved random number information by a random number verification unit 1501. In a case where it is determined by the random number verification unit 1501 that the pieces of random number information match, the information processing device 100 to be the TaaS determines that the browser plugin 1212 is used by an authorized user.

On the other hand, in a case where it is determined by the random number verification unit 1501 that the pieces of random number information do not match, the information processing device 100 to be the TaaS determines that the browser plugin 1212 is not used by an authorized user. As a result, the information processing device 100 to be the TaaS can prevent hacking of the browser plugin 1212 and can improve security.

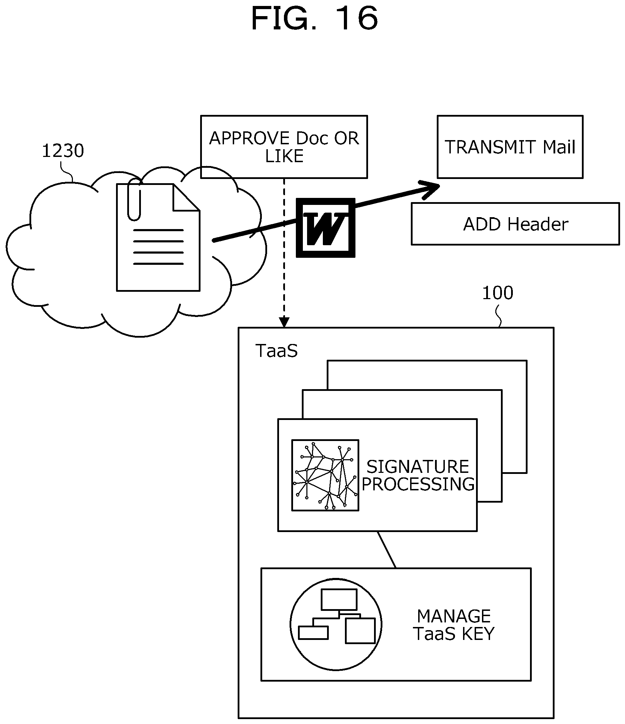

Next, description of FIG. 16 will be made. In FIG. 16, the mailer plugin 1214 detects that a document to which one or a plurality of signatures are added by the information processing device 100 is attached to an email to be transmitted by the mailer 1213. At this time, the mailer plugin 1214 sets flag information indicating that the email is a reliability verification target to a header of the email. The mailer 1213 transmits the email attached with the document and having the header to which the flag information is set, to the reception side 1220.

The mailer 1221 receives the email attached with the document and having the header to which the flag information is set and opens the email. In a case where the email is opened, the mailer plugin 1222 determines whether or not to transmit a request for verifying reliability of the document to the information processing device 100 to be the TaaS, based on classification information of the email or the header of the email.

The classification information is determined, for example, from a transmission address of the email or the like. The classification information indicates, for example, classification such as within or outside a company. The classification information indicates, for example, classification such as a supervisor or subordinate. The classification information indicates, for example, classification such as home use or business use. For example, in a case where the classification information of the email indicates the outside of the company, the mailer plugin 1222 determines to transmit the request for verifying the reliability of the document to the information processing device 100 to be the TaaS.

Furthermore, for example, in a case where the flag information is set to the header of the email, the mailer plugin 1222 determines to transmit the request for verifying the reliability of the document to the information processing device 100 to be the TaaS. As a result, the mailer plugin 1222 can reduce opportunities to transmit the request for verifying the reliability of the document to the information processing device 100 to be the TaaS. Therefore, the mailer plugin 1222 can reduce the workload on the information processing device 100.

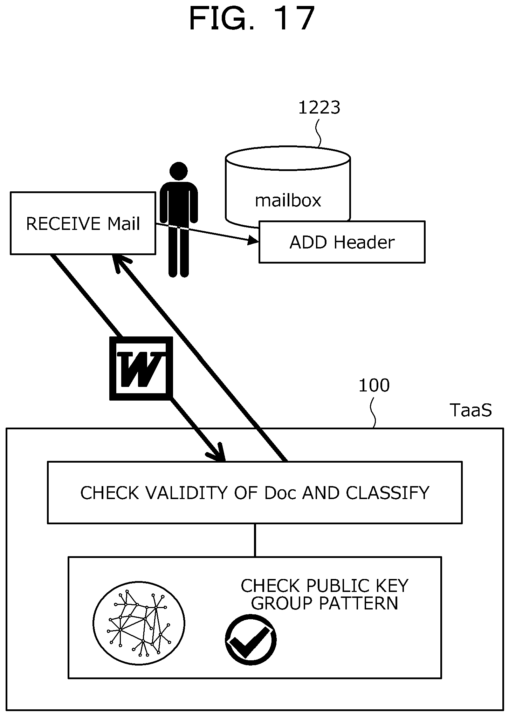

Next, description of FIG. 17 will be made. In FIG. 17, it is assumed that the mailer plugin 1222 have determined to transmit the request for verifying the reliability of the document to the information processing device 100 to be the TaaS. The mailer plugin 1222 generates a request for verifying the reliability of the document including the document, the transmission source of the document, and the signature pattern information that represents the feature of the one or the plurality of signatures added to the document and transmits the request to the information processing device 100 to be the TaaS.

The information processing device 100 to be the TaaS specifies the transmission source of the document included in the request and extracts signature pattern information associated with the specified transmission source, from the public key pattern DB 500. The information processing device 100 to be the TaaS determines whether or not the signature pattern information included in the request and the extracted signature pattern information match. In a case where it is determined that the pieces of signature pattern information match, the information processing device 100 to be the TaaS determines that the document included in the request has reliability. On the other hand, in a case where it is determined that the pieces of signature pattern information do not match, the information processing device 100 to be the TaaS determines that the document included in the request does not have reliability.

The information processing device 100 to be the TaaS transmits a result of determining whether or not the document has reliability to the mailer plugin 1222. When receiving the determination result, the mailer plugin 1222 sets the determination result to the header of the email. Furthermore, if the header of the email includes the flag information, the mailer plugin 1222 deletes the flag information.

As a result, it can be prevented for the mailer plugin 1222 to accidentally transmit the request for verifying the reliability of the document again to the information processing device 100 to be the TaaS, regarding the document of which the reliability has been determined once. Therefore, the mailer plugin 1222 can reduce the workload on the information processing device 100 to be the TaaS.

### (Detection Processing Procedure)

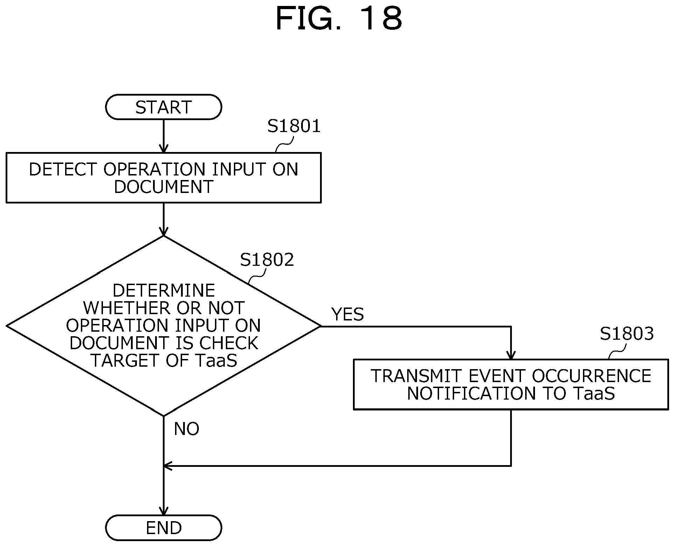

Next, an example of a detection processing procedure executed by the transmission-side device 201 will be described with reference to FIG. 18. The detection processing is implemented by, for example, the CPU 801, the storage region such as the memory 802 or the recording medium 805, and the network I/F 803 illustrated in FIG. 8.

FIG. 18 is a flowchart illustrating an example of the detection processing procedure. In FIG. 18, the browser plugin 1212 detects an operation input for a document (step S1801). Next, the browser plugin 1212 determines whether or not the operation input for the document is a check target of the TaaS (step S1802).

Here, in a case where the operation input is the check target of the TaaS (step S1802: Yes), the browser plugin 1212 proceeds to the processing in step S1803. On the other hand, in a case where the operation input is not the check target of the TaaS (step S1802: No), the browser plugin 1212 ends the detection processing.

In step S1803, the browser plugin 1212 transmits an event occurrence notification to the TaaS (step S1803). Then, the browser plugin 1212 ends the detection processing. As a result, the information processing device 100 to be the TaaS can detect an event indicating that the specific operation input is performed.

### (Transmission Preparation Processing Procedure)

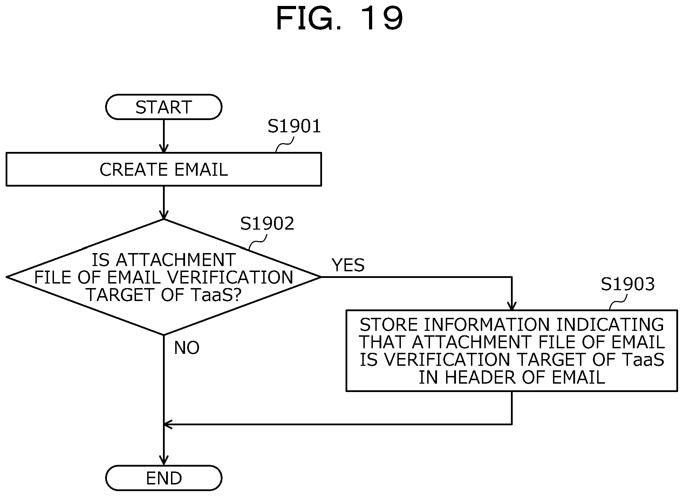

Next, an example of a transmission preparation processing procedure executed by the transmission-side device 201 will be described with reference to FIG. 19. Transmission preparation processing is implemented by, for example, the CPU 801, the storage region such as the memory 802 or the recording medium 805, and the network I/F 803 illustrated in FIG. 8.

FIG. 19 is a flowchart illustrating an example of the transmission preparation processing procedure. In FIG. 19, the mailer plugin 1214 creates an email (step S1901). Next, the mailer plugin 1214 determines whether or not an attachment file of the email is a verification target of the TaaS (step S1902). The verification target is, for example, a document to which a signature is added.

Here, in a case where the attachment file is the verification target of the TaaS (step S1902: Yes), the mailer plugin 1214 proceeds to the processing in step S1903. On the other hand, in a case where the attachment file is not the verification target of the TaaS (step S1902: No), the mailer plugin 1214 ends the transmission preparation processing.

In step S1903, the mailer plugin 1214 stores information indicating that the attachment file of the email is the verification target of the TaaS, in a header of the email (step S1903). Then, the mailer plugin 1214 ends the transmission preparation processing. As a result, the mailer plugin 1214 can improve efficiency of the verification processing on the reception side 1220.

### (Opening Processing Procedure)

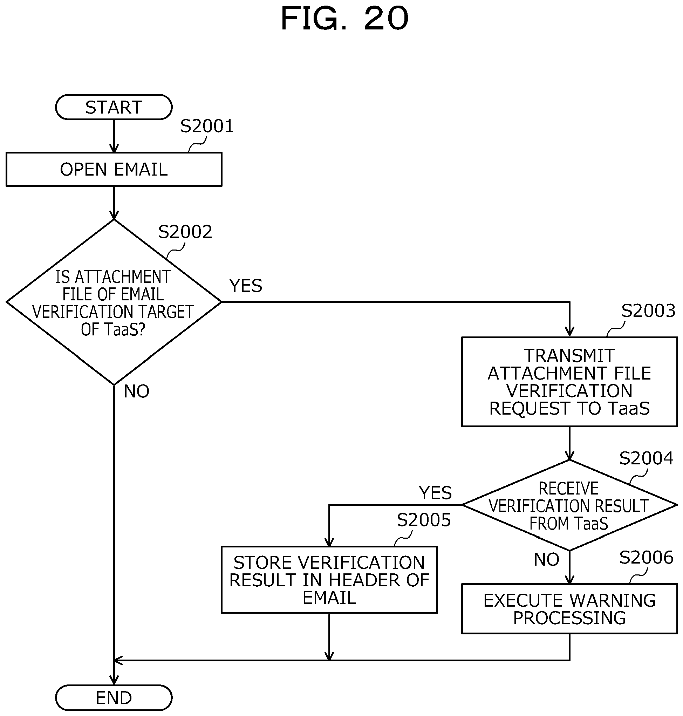

Next, an example of an opening processing procedure executed by the reception-side device 202 will be described with reference to FIG. 20. The opening processing is implemented by, for example, the CPU 901, the storage region such as the memory 902 or the recording medium 905, and the network I/F 903 illustrated in FIG. 9.

FIG. 20 is a flowchart illustrating an example of the opening processing procedure. In FIG. 20, the mailer plugin 1222 opens an email (step S2001). Next, the mailer plugin 1222 determines whether or not an attachment file of the email is a verification target of the TaaS, based on a header of the email (step S2002).

Here, in a case where the attachment file is the verification target of the TaaS (step S2002: Yes), the mailer plugin 1222 proceeds to the processing in step S2003. On the other hand, in a case where the attachment file is not the verification target of the TaaS (step S2002: No), the mailer plugin 1222 ends the opening processing.

In step S2003, the mailer plugin 1222 transmits an attachment file verification request to the TaaS (step S2003). Next, the mailer plugin 1222 receives the verification result from the TaaS and determines whether or not the verification result is OK (step S2004).

Here, in a case of OK (step S2004: Yes), the mailer plugin 1222 proceeds to the processing in step S2005. On the other hand, in a case of not OK (step S2004: No), the mailer plugin 1222 proceeds to the processing in step S2006.

In step S2005, the mailer plugin 1222 stores the verification result in the header of the email (step S2005). Then, the mailer plugin 1222 ends the opening processing. As a result, the mailer plugin 1222 can verify reliability of the attachment file. Furthermore, the mailer plugin 1222 can prevent the verified attachment file from being verified again and reduce a workload.

In step S2006, the mailer plugin 1222 executes warning processing (step S2006). Then, the mailer plugin 1222 ends the opening processing.

### (Signature Generation Processing Procedure)

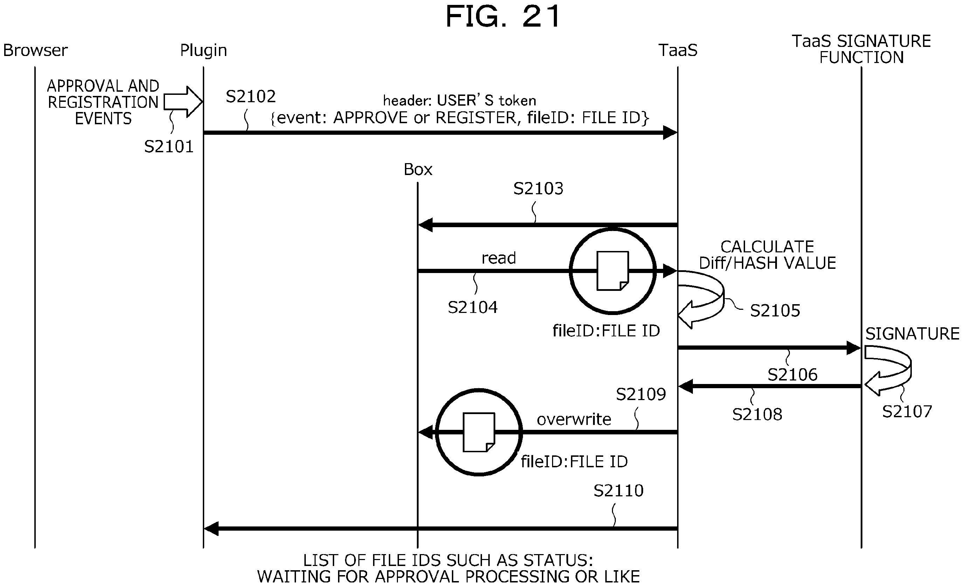

Next, an example of a signature generation processing procedure executed by the reliability verification system 200 will be described with reference to FIG. 21.

FIG. 21 is a sequence diagram illustrating an example of the signature generation processing procedure. In FIG. 21, the browser plugin 1212 detects an approval event or a registration event occurred in the browser 1211 (step S2101). The approval event is that an approval operation is performed. The registration event is that a registration operation is performed. The registration operation is, for example, an operation for registering a file in a document sharing service.

Next, when detecting the approval event or the registration event, the browser plugin 1212 transmits data of header: user's token {event: approval or registration, fileID: file ID} to the TaaS (step S2102). The user's token makes it possible to identify a user to be a signer. The file ID makes it possible to identify a target file to which a signature is added. The TaaS is implemented by the information processing device 100.

On the other hand, when receiving data, the TaaS transmits a file reading request to the Box 1402 (step S2103). The reading request includes fileID: file ID. The file is, for example, a document. Next, the TaaS receives a file corresponding to the fileID: file ID from the Box 1402, as a response to the reading request (step S2104). Next, the TaaS calculates a Diff/hash value of the file (step S2105).

Then, the TaaS transmits a signature generation request including the Diff/hash value to a TaaS signature function included in the information processing device 100 (step S2106). The generation request may include the user's token, for example. When receiving the generation request, the TaaS signature function generates a signature based on the Diff/hash value and transmits the signature to the TaaS (step S2107). For example, the TaaS signature function may acquire key information for a signature corresponding to a user and generate a signature based on the user's token. The TaaS receives the signature (step S2108).

Next, the TaaS adds the signature to the file and transmits an overwrite request for overwriting a file before addition with a file after addition including the fileID: file ID to the Box 1402 (step S2109). Then, the TaaS transmits a list of the file IDs such as a status : waiting for approval or the like to the browser plugin 1212 (step S2110). Thereafter, the reliability verification system 200 ends the signature generation processing.

### (Signature Generation Processing Procedure)

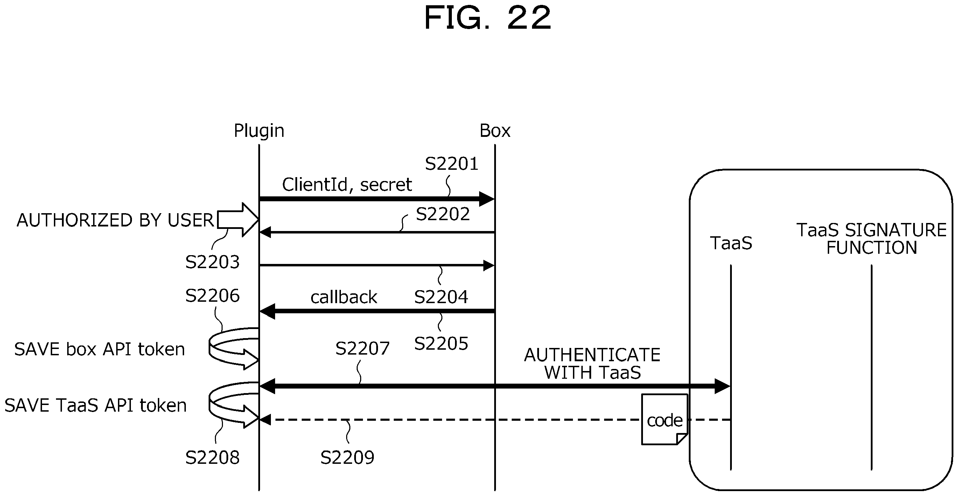

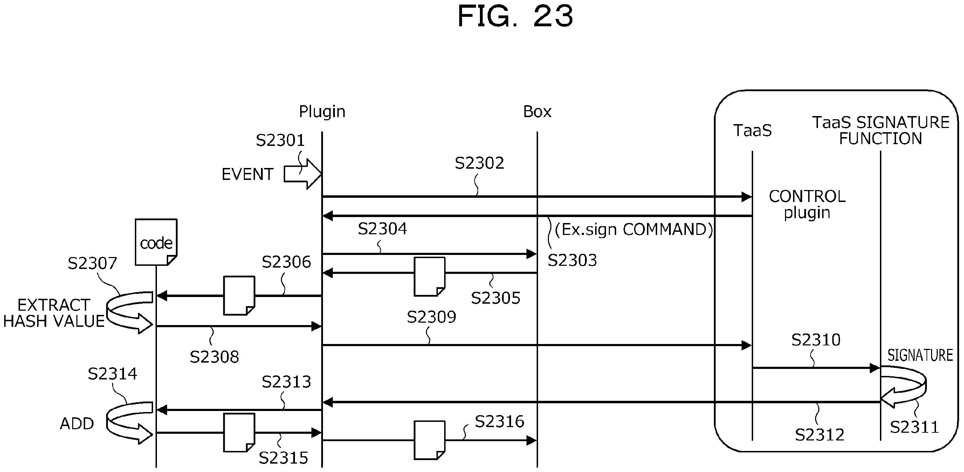

Next, another example of the signature generation processing procedure executed by the reliability verification system 200 will be described with reference to FIGs. 22 and 23.

FIGs. 22 and 23 are sequence diagrams illustrating another example of the signature generation processing procedure. In FIG. 22, the browser plugin 1212 transmits a token request including {ClientId,secret} to the Box 1402 (step S2201). ClientId is, for example, information defined in OAuth2.0 and enables to identify the browser plugin 1212. For example, secret is information defined in OAuth2.0. Then, the browser plugin 1212 acquires a box API token from the Box 1402 (step S2202). The box API token is a right to use a storage region managed by the Box 1402.

Next, the browser plugin 1212 receives authorization of a user to use the Box 1402 and receives input of an ID and a password (step S2203). Then, the browser plugin 1212 transmits the ID and the password to the Box 1402 (step S2204).

Next, the browser plugin 1212 receives a callback (step S2205). The callback is transmitted from the Box 1402 in a case where the user is authenticated based on the ID and the password. Then, when receiving the callback, the browser plugin 1212 can use the Box 1402 with the Box API token. Therefore, the browser plugin 1212 saves the box API token (step S2206).

Next, the browser plugin 1212 authenticates with the TaaS, establishes communication with the TaaS, and receives the TaaS API token from the TaaS (step S2207). The TaaS API token is, for example, a right to use the TaaS. Then, the browser plugin 1212 saves the TaaS API token (step S2208).

Next, the browser plugin 1212 receives a Javascript code from the TaaS (step S2209). The Javascript code is, for example, a code for calculating a hash value. Further, the Javascript code may be, for example, a code used to perform control for adding a signature to a file. Here, description of FIG. 23 will be made.

In FIG. 23, the browser plugin 1212 detects an event occurred in the browser 1211 (step S2301). The event is that a specific operation is performed in the browser 1211. Next, when detecting the event, the browser plugin 1212 transmits a control request to the TaaS (step S2302). Then, the browser plugin 1212 receives an Ex.sign command from the TaaS and performs the following workflow under the control of the TaaS (step S2303).

The browser plugin 1212 transmits a file reading request to the Box 1402 (step S2304). Next, as a result of transmitting the file reading request, the browser plugin 1212 receives a file from the Box 1402 (step S2305).

Then, the browser plugin 1212 outputs the received file to the Javascript code (step S2306). The Javascript code extracts a hash value of the file (step S2307). The browser plugin 1212 acquires the hash value of the file from the Javascript code (step S2308).

The browser plugin 1212 transmits a signature generation request including the hash value of the file to the TaaS (step S2309). The TaaS transmits the received signature generation request to the TaaS signature function (step S2310). When receiving the signature generation request, the TaaS signature function generates a signature based on the hash value of the file and transmits the signature to the TaaS (step S2311). The TaaS receives the signature and transmits the signature to the browser plugin 1212 (step S2312).

The browser plugin 1212 receives the signature and outputs the signature to the Javascript code (step S2313). The Javascript code adds the received signature to the file (step S2314). The Javascript code transmits the file to which the signature has been added to the browser plugin 1212 (step S2315).

The browser plugin 1212 transmits an overwrite request for overwriting a file before the signature is added with a file to which the signature has been added to the Box 1402 (step S2316). Thereafter, the reliability verification system 200 ends the signature generation processing.

### (Verification Request Processing Procedure)

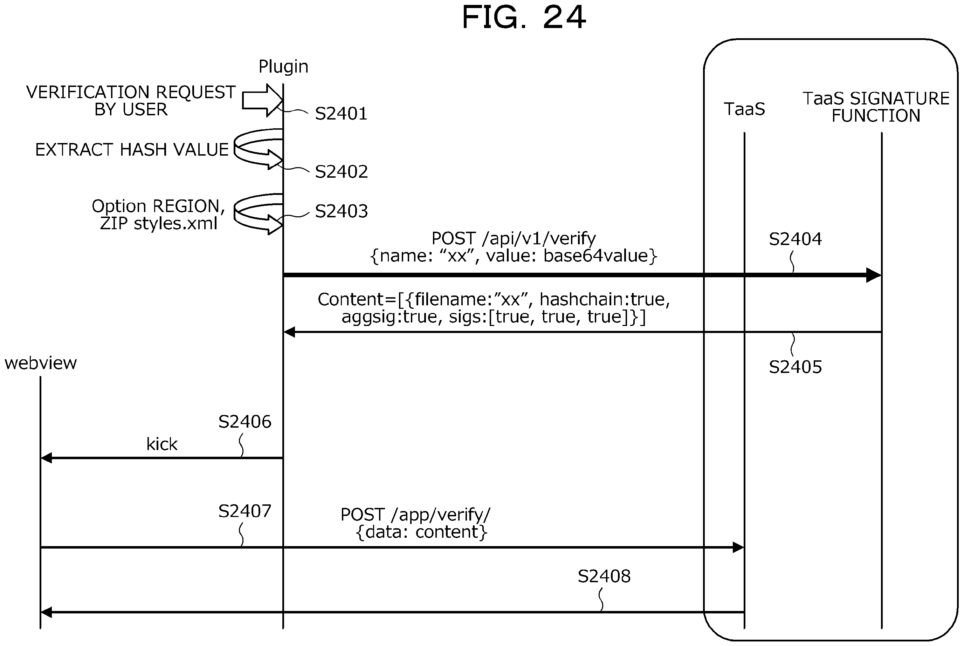

Next, an example of a verification request processing procedure executed by the reliability verification system 200 will be described with reference to FIG. 24.

FIG. 24 is a sequence diagram illustrating an example of the verification request processing procedure. In FIG. 24, the mailer plugin 1222 receives a verification request from a user (step S2401).

Next, the mailer plugin 1222 confirms a signature of a target file to which the verification request has been issued and extracts a hash value (step S2402). Then, the mailer plugin 1222 zips an Option region and styles.xml and generates a zip file (step S2403).

Next, the mailer plugin 1222 transmits data including a hash value of {name:"xx",value:base64value} with POST/api/v1/verify to the TaaS (step S2404). The name enables to identify a file. The base64value may include, for example, a hash value, a zip file, or the like. The TaaS outputs the received data to a TaaS verification function.

The TaaS verification function outputs a result of verifying reliability of a target file based on the hash value to the TaaS (step S2405). The verified result is
Content=[{filename:"xx",hashchain:true,aggsig:true,sigs:[true,true,true]}]. The hashchain indicates a result of verifying reliability with a hashchain. If the hashchain is true, this indicates the reliability, and if the hashchain is false, this indicates no reliability. The aggsig indicates a result of verifying the reliability with the signature. If the aggsig is true, this indicates the reliability, and if the aggsig is false, this indicates no reliability.

The sigs indicates a result of verifying the reliability based on the feature of the one or the plurality of signatures added to the target file. For example, the sigs indicates whether or not each of the one or the plurality of signatures added to the target file matches each of one or a plurality of signatures attached to a file in the past. In the sigs, if an n-th element is true, this indicates that an n-th signature added to the target file matches an n-th signature added to the past file. In the sigs, if the n-th element is false, this indicates that the n-th signature added to the target file does not match the n-th signature added to the past file. Regarding the sigs, the larger the number of true, the higher the reliability. The TaaS transmits the result of verifying the reliability of the target file to the mailer plugin 1222.

When receiving the result of verifying the reliability of the target file, the mailer plugin 1222 kicks a webview function (step S2406). The webview function transmits a control request including {data:content} to the TaaS with POST/app/verify/ (step S2407). The control request is a result for receiving control to display the result of verifying the reliability of the target file, from the TaaS. The webview function receives and displays the result of verifying the reliability of the target file under the control of the TaaS (step S2408).

### (Transmission Source Authentication Processing Procedure)

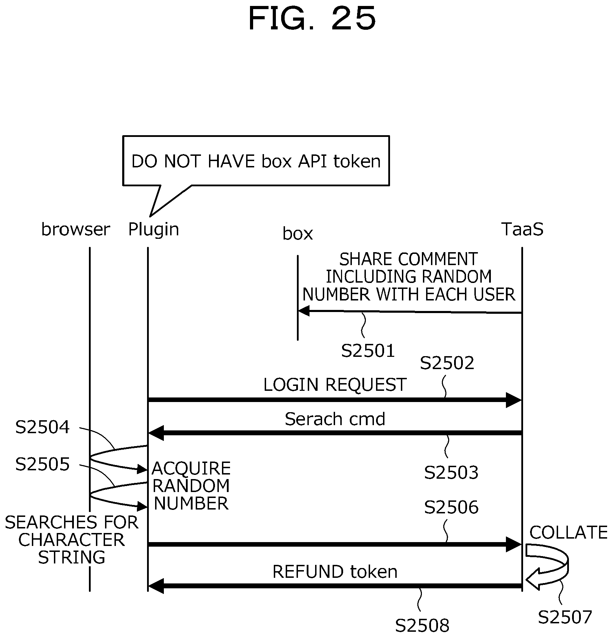

Next, an example of a transmission source authentication processing procedure executed by the reliability verification system 200 will be described with reference to FIG. 25.

FIG. 25 is a sequence diagram illustrating an example of the transmission source authentication processing procedure. In the example in FIG. 25, it is assumed that the browser plugin 1212 do not have a box API token. In FIG. 25, the TaaS stores a comment including a random number in each user specific folder of the Box 1402 and shares the comment with each user (step S2501).

The browser plugin 1212 transmits a login request to the TaaS (step S2502). When receiving the login request, the TaaS issues Serach cmd to the browser plugin 1212 (step S2503). The browser plugin 1212 acquires a random number in cooperation with the browser 1211 according to Serach cmd (step S2504). Furthermore, the browser plugin 1212 searches for a character string of the comment in cooperation with the browser 1211 according to Serach cmd (step S2505).

The browser plugin 1212 transmits the acquired random number and the searched character string to the TaaS (step S2506). The TaaS collates the received random number and character string with the comment including the random number (step S2507). If the collation result is OK, the TaaS refunds a token to the browser plugin 1212 (step S2508). Thereafter, the reliability verification system 200 ends the transmission source authentication processing. As a result, the TaaS can improve security.

### (Transmission Source Authentication Processing Procedure)

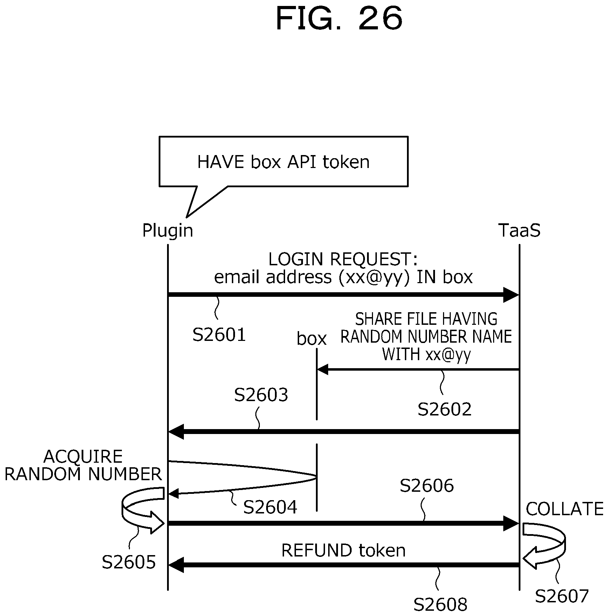

Next, another example of the transmission source authentication processing procedure executed by the reliability verification system 200 will be described with reference to FIG. 26.

FIG. 26 is a sequence diagram illustrating another example of the transmission source authentication processing procedure. In the example in FIG. 26, it is assumed that the browser plugin 1212 have a box API token. In FIG. 26, the browser plugin 1212 transmits a login request to the TaaS (step S2601). The login request includes an email address (xx@yy) in the Box 1402.

When receiving the login request, the TaaS generates a random number and shares a file having a random number name with a user indicated by the email address (xx@yy) (step S2602). The TaaS notifies the browser plugin 1212 of sharing completion (step S2603).

When receiving the notification, the browser plugin 1212 accesses the Box 1402 and acquires the file having the random number name (step S2604). Next, the browser plugin 1212 acquires a random number from the file having the random number name (step S2605). Then, the browser plugin 1212 transmits the random number to the TaaS (step S2606).

The TaaS collates the received random number with the generated random number (step S2607). If the collation result is OK, the TaaS refunds the token to the browser plugin 1212 (step S2608). Thereafter, the reliability verification system 200 ends the transmission source authentication processing. As a result, the TaaS can improve security.

As described above, according to the information processing device 100, it is possible to acquire the transmission source of the target document that has been transmitted and the first signature pattern information that represents the feature of the one or the plurality of signatures regarding the target document. According to the information processing device 100, it is possible to store the signature pattern information that represents the feature of the one or the plurality of signatures regarding the document, acquired in the past, in the storage unit in association with the transmission source of the document. According to the information processing device 100, it is possible to extract the second signature pattern information associated with the transmission source of the acquired target document from the storage unit. According to the information processing device 100, it is possible to verify the reliability of the target document based on a result of comparing the acquired first signature pattern information and the extracted second signature pattern information. As a result, the information processing device 100 can accurately verify the reliability of the target document.

According to the information processing device 100, the weight based on the number of documents, transmitted in the past, regarding the one or the plurality of signatures having a certain feature and the signature pattern information representing the feature can be stored in the storage unit in association with the transmission source of each document. According to the information processing device 100, it is possible to verify the reliability of the target document, based on the result of comparing the acquired first signature pattern information with the extracted second signature pattern information and the weight corresponding to the extracted second signature pattern information, with reference to the storage unit. As a result, the information processing device 100 can weight the reliability of the target document and evaluate the reliability in a stepwise manner.

According to the information processing device 100, it is possible to acquire the transmission source of the target document and the first signature pattern information that represents the feature of the one or the plurality of signatures regarding the target document, from the transmission destination of the target document. As a result, the information processing device 100 can acquire the transmission source of the target document and the first signature pattern information in a situation where it is attempted to verify the reliability of the target document at the transmission destination of the target document. Therefore, the information processing device 100 can reduce the workload.

According to the information processing device 100, it is possible to detect that the specific operation is performed on the target document, at the transmission source of the target document. According to the information processing device 100, in a case of detecting the specific operation, it is possible to control the transmission source of the target document so as to transmit the target document to the transmission destination of the target document in a state where the document is set to be the reliability verification target. As a result, the information processing device 100 enables the transmission destination of the target document to determine whether or not to verify the reliability of the target document and can reduce the workload.

According to the information processing device 100, it is possible to control the transmission destination of the target document, so as to exclude the target document from the reliability verification target, after verifying the reliability of the target document. As a result, the information processing device 100 can prevent repeated verification of the reliability of the target document at the transmission destination of the target document and reduce the workload.

According to the information processing device 100, it is possible to compare the random number information written into the specific storage region that can be referred from the transmission source of the target document with the random number information acquired from the transmission source of the target document, at each predetermined timing. According to the information processing device 100, it is possible to verify the reliability of the transmission source of the target document, based on the comparison result. As a result, the information processing device 100 can improve security.

According to the information processing device 100, in a case where the number of documents, transmitted in the past, regarding the one or the plurality of signatures having a certain feature is equal to or more than the threshold, it is possible to store the signature pattern information that represents the feature in the storage unit in association with the transmission source of each document. As a result, since the information processing device 100 selects the signature pattern information that represents the valid feature and stores the signature pattern information in the storage unit, it is possible to improve the accuracy of verifying the reliability of the target document.

According to the information processing device 100, in a case where it is detected that the specific operation is performed on the target document at the transmission source of the target document, it is possible to create the signature regarding the target document. As a result, the information processing device 100 can reduce the workload for creating the signature at the transmission source of the target document.

According to the information processing device 100, it is possible to use the second signature pattern information that represents the feature of the one or the plurality of signatures regarding the document transmitted to the transmission destination different from that of the target document. As a result, the information processing device 100 can utilize information other than the signature pattern information that represents the feature of the one or the plurality of signatures regarding the document transmitted to the transmission destination same as that of the target document. As a result, the information processing device 100 can make it easier to verify the reliability of the target document. The information processing device 100 can increase the number of documents of which the reliability can be verified.

According to the information processing device 100, it is possible to adopt the information that represents the feature of the combination of the key information used to create the one or the plurality of signatures, as the signature pattern information. As a result, the information processing device 100 can verify the reliability of the target document with reference to the combination of the key information.

According to the information processing device 100, it is possible to adopt the information that represents the feature of the combination of the attributes of the creators of the one or the plurality of signatures, as the signature pattern information. As a result, the information processing device 100 can verify the reliability of the target document with reference to the combination of the attributes of the creators.

According to the information processing device 100, it is possible to transmit the result of verifying the reliability of the target document to the transmission destination of the target document in association with the target document. As a result, the information processing device 100 allows the result of verifying the reliability of the target document to be referred by the transmission destination of the target document.

According to the information processing device 100, it is possible to verify the reliability of the target document in the transmission source of the target document and a place other than the transmission destination of the target document. As a result, the information processing device 100 can reduce the workloads on the transmission source of the target document and the transmission destination of the target document.

According to the information processing device 100, it is possible to set the target document stored using the document sharing service as a processing target. As a result, the information processing device 100 can refer to the document without directly receiving the document or the information regarding the document from the transmission destination of the document and can enhance convenience.

Note that the verification method described in the present embodiment may be implemented by executing a prepared program on a computer such as a PC or a workstation. The verification program described in the present embodiment is executed by being recorded on a computer-readable recording medium and being read from the recording medium by the computer. The recording medium is a hard disk, a flexible disk, a compact disc (CD)-ROM, a magneto optical disc (MO), a digital versatile disc (DVD), or the like. Furthermore, the verification program described in the present embodiment may be distributed via a network such as the Internet.

### CITATION LIST

### PATENT DOCUMENT

Patent Document 1: Japanese Laid-open Patent Publication No. 2013-235489

### REFERENCE SIGNS LIST

100 information processing device
101 document
102, 103, 111 signature pattern information
110 storage unit
200 reliability verification system
201 transmission-side device
202 reception-side device
210 network
300, 800, 900 bus
301, 801, 901 CPU
302, 802, 902 memory
303, 803, 903 network I/F
304, 804, 904 recording medium I/F
305, 805, 905 recording medium
400 common DB
500 public key pattern DB
600 random number management DB
700 target event list
806, 906 display
807, 907 input device
1000 first storage unit
1001 first acquisition unit
1002 extraction unit
1003 verification unit
1004 setting unit
1005 first output unit
1010 second storage unit
1011 second acquisition unit
1012 creation unit
1013 second output unit
1020 third storage unit
1021 third acquisition unit
1022 management unit
1023 third output unit
1110, 1210 transmission side
1111, 1212 browser plugin
1112, 1213, 1221 mailer
1113, 1122, 1215, 1224 mail server
1120, 1220 reception side
1121, 1214, 1222 mailer plugin
1130 signature history
1211 browser
1223 mailbox
1230 document sharing service
1401 plugin store
1402 Box
1501 random number verification unit
1502 random number generation unit

## Claims

1. A verification method implemented by a computer, the verification method comprising:
acquiring a transmission source of a transmitted target document and first signature pattern information that represents a feature of one or a plurality of signatures regarding the target document;
extracting second signature pattern information associated with the acquired transmission source of the target document from a storage unit that stores signature pattern information that represents a feature of one or a plurality of signatures regarding a document acquired in the past in association with a transmission source of the document; and
verifying reliability of the target document, based on a result of comparing the acquired first signature pattern information and the extracted second signature pattern information.

2. The verification method according to claim 1, wherein
the storage unit stores a weight based on the number of documents, regarding one or a plurality of signatures that has a certain feature, transmitted in the past and signature pattern information that represents the feature in association with a transmission source of each of the documents, and
the verifying processing includes
verifying the reliability of the target document, based on a result of comparing the acquired first signature pattern information and the extracted second signature pattern information and a weight that corresponds to the extracted second signature pattern information, with reference to the storage unit.

3. The verification method according to claim 1 or 2, wherein
the target document is information to be attached to an email and transmitted, and
the acquiring processing includes
acquiring a transmission source of the target document and first signature pattern information that represents a feature of one or a plurality of signatures regarding the target document from a transmission destination of the target document.

4. The verification method according to claim 3, the verification method further comprising:
in a case where it is detected that a specific operation is performed on the target document at the transmission source of the target document, controlling the transmission source of the target document so as to transmit the target document to the transmission destination of the target document in a state where the target document is set to a reliability verification target.

5. The verification method according to claim 4, the verification method further comprising:
controlling the transmission destination of the target document so as to exclude the target document from the reliability verification target after the reliability of the target document has been verified.

6. The verification method according to any one of claims 1 to 5, the verification method further comprising:
verifying reliability of the transmission source of the target document, based on a result of comparing random number information written into a specific storage region that is referable from the transmission source of the target document and random number information acquired from the transmission source of the target document, at each predetermined timing.

7. The verification method according to any one of claims 1 to 6, the verification method further comprising:
in a case where the number of documents, transmitted in the past, regarding one or a plurality of signatures that has a certain feature is equal to or more than a threshold, storing signature pattern information that represents the feature in association with a transmission source of each document in the storage unit.

8. The verification method according to any one of claims 1 to 7, the verification method further comprising:
in a case where it is detected that a specific operation is performed on the target document at the transmission source of the target document, creating a signature regarding the target document.

9. The verification method according to any one of claims 1 to 8, wherein the second signature pattern information represents a feature of one or a plurality of signatures regarding a document transmitted to a transmission destination different from a transmission destination of the target document.

10. The verification method according to any one of claims 1 to 9, wherein the signature pattern information represents a feature of a combination of key information used to create one or a plurality of signatures.

11. The verification method according to any one of claims 1 to 10, wherein the signature pattern information represents a feature of a combination of attributes of creators of one or a plurality of signatures.

12. The verification method according to any one of claims 1 to 11, the verification method comprising:
transmitting a result of verifying the reliability of the target document to the transmission destination of the target document in association with the target document.

13. The verification method according to any one of claims 1 to 12, wherein the computer is a device different from a device to be the transmission source of the target document and a device to be the transmission destination of the target document.

14. The verification method according to any one of claims 1 to 13, wherein the target document is stored by using a document sharing service.

15. A verification program in which a computer executes processing comprising:
acquiring a transmission source of a transmitted target document and first signature pattern information that represents a feature of one or a plurality of signatures regarding the target document;
extracting second signature pattern information associated with the acquired transmission source of the target document from a storage unit that stores signature pattern information that represents a feature of one or a plurality of signatures regarding a document acquired in the past in association with a transmission source of the document; and
verifying reliability of the target document, based on a result of comparing the acquired first signature pattern information and the extracted second signature pattern information.

16. An information processing apparatus comprising a control unit configured to perform processing including:
acquiring a transmission source of a transmitted target document and first signature pattern information that represents a feature of one or a plurality of signatures regarding the target document;
extracting second signature pattern information associated with the acquired transmission source of the target document from a storage unit that stores signature pattern information that represents a feature of one or a plurality of signatures regarding a document acquired in the past in association with a transmission source of the document; and
verifying reliability of the target document, based on a result of comparing the acquired first signature pattern information and the extracted second signature pattern information.
